# EUROPEAN PATENT SPECIFICATION

(11) **EP 3 306 765 B1**
(45) Date of publication and mention of the grant of the patent: **17.11.2021**
(21) Application number: 17001579.6
(22) Date of filing: 21.09.2017
(51) Int. Cl.: H02H 1/00, H02H 3/08, H02H 3/46

(54) **SAFETY DEVICE ADAPTED TO AUTOMATICALLY INTERRUPT THE CURRENT SUPPLY TO AN ELECTRICAL WIRING SYSTEM UPON OCCURRENCE OF AN ANOMALOUS EVENT**
SICHERHEITSVORRICHTUNG ZUR AUTOMATISCHEN UNTERBRECHUNG DER STROMVERSORGUNG EINES ELEKTRISCHEN LEITUNGSSYSTEMS BEI AUFTRETEN EINES ANOMALEN EREIGNISSES
DISPOSITIF DE SÉCURITÉ CONÇU POUR INTERROMPRE L'ALIMENTATION EN COURANT D'UN SYSTÈME DE CÂBLAGE ÉLECTRIQUE LORS DE LA SURVENUE D'UN ÉVÉNEMENT ANORMAL

(30) Priority: 04.10.2016 IT 201600099185
(43) Date of publication of application: 11.04.2018
(73) Proprietor: Minati, Ludovico, 38055 Grigno (TN) (IT); Intermotion Technology, Inc., Oregon City, OR 97045 (US)
(72) Inventor: Minati, Ludovico, 38055 Grigno (TN) (IT)
(74) Representative: Mozzanica, Luca

(56) References cited:
- US-A1- 2012 004 867
- US-A1- 2015 142 196
- US-B1- 6 658 360

## Description

### Field of application of the invention

The present invention finds application in the domain of electrical safety, that is in the field encompassing those devices and systems suitable for installation in an electrical wiring system with the purpose of interrupting the supply of electric current to the system, or to part of it, whenever an event is detected which is considered anomalous and could therefore reveal a situation of danger for persons and/or property.

An electrical wiring system is a set of electric appliances connected one to another by means of electrical conductors. Electrical wiring systems are generally classified as residential or industrial and can be, for example, single-phase or three-phase. Electrical wiring systems are usually connected to a distribution network by means of which electric current is delivered to the system. Here, and below in the present description, with the expression "electrical wiring system", we refer to any kind of electrical wiring system of the aforementioned types. The present invention, more precisely, pertains to an electrical safety device suitable for installation in an electrical wiring system corresponding to the point of connection between the same and a distribution network, and adapted to automatically interrupt said connection (that is, suitable for automatically interrupting the supply of electric current to the electrical wiring system or part of it) upon occurrence of an event considered as anomalous.

### Review of prior art

Existing electrical safety devices generally consist of thermal-magnetic circuit breakers and residual current devices. Thermal-magnetic circuit breakers are breakers capable of interrupting the flow of electric current in a circuit of an electrical wiring system whenever an overcurrent of intensity greater than a predetermined threshold occurs (for example, following a short-circuit or an electrical overload of an appliance connected to the electrical wiring system). Residual current devices are breakers capable of interrupting the flow of current in a circuit of an electrical wiring system whenever a dispersion (leakage) of current of intensity greater than a predetermined threshold occurs (that is, in the case of single-phase systems, whenever the difference of intensity between the current in the phase conductor and the current in the neutral conductor is greater than a predetermined amount, said difference representing the amount of dispersion current).

From the above it is clear that, in presence of over-currents and dispersions of electric current of intensity lower than the aforementioned thresholds, there is no intervention of any kind by the aforementioned thermal-magnetic circuit breakers and residual current devices. This represents an evident disadvantage of the current electrical safety devices in that, as shall be better explained below, certain events can occur which, while constituting a situation of danger for persons and/or property, do not give rise to an increase in the absorbed current and/or total dispersion current sufficient to trigger the intervention of the aforementioned devices.

For example, many of the presently commercially-available electric appliances include conductors which, as a consequence of their gauge, are not capable of conducting, not even under failure conditions, a current with intensity sufficient to cause a thermal-magnetic circuit breaker having the usual threshold for a residential wiring system to trip (that is 16 A or greater). As a consequence of a malfunction an overload may therefore result which is not sufficient to trigger the intervention by the thermal-magnetic circuit breaker but sufficient to start an overheating due to Joule effect. In the worst case scenario, said overheating may in turn start a combustion reaction. This may happen for example in a battery charger or in a power supply of a portable appliance (such as a mobile phone) when an internal short circuit or other malfunction of the switching mode regulator occurs. As a consequence of the said event, a current of, for example, 3 - 4 A may flow in the circuit, which, at a voltage of 220 - 230 V, corresponds to a total power of about 600 - 800 W. Such power may cause the battery charger or power supply to become incandescent, the same not having been designed to dissipate in an efficacious manner such power. While that represents an overload for the battery charger or power supply, said overload is not sufficient to trigger the intervention of the thermal-magnetic circuit breaker usually installed to protect residential electrical wiring systems.

As a further example, following accidental connection to a conductor having nonzero voltage with respect to ground, in an electrical wiring system rapid and persistent increases of the total electrical dispersion current may arise which are not sufficient to trigger the intervention of the residual current device. This for example may happen when a child comes into contact, directly or indirectly, with a phase conductor. In such a case, the contact could generate, for example, a total electrical dispersion current having an intensity of 5 - 10 mA in less than 0.1 seconds, and the dispersion may persist for several seconds. Such a dispersion current, due to its characteristics of intensity and time course, rarely causes a disconnection of the electrical wiring system by residual current device (which is usually set for a threshold of 20 mA). The resulting electrical dispersion current, however, even though not lethal for an adult, may be lethal for a child.

In light of what was stated above, it is evident that the thresholds set by the existing electrical safety devices represent a compromise between safety and functionality which can be improved amply. The aforementioned thresholds on one hand cannot be considerably reduced because that would lead to an unacceptably high frequency of disconnection events in the absence of failures, and on the other hand do not provide a complete protection against situations of danger.

The existing electrical safety devices furthermore do not provide any protection against malfunctions of an appliance of the electrical wiring system not giving rise to either overloads, or anomalous increases of the total electrical dispersion current. For example, when the switching mode power converter of a fluorescent lamp oscillates in an anomalous manner or an electric motor develops an electromechanical failure, a situation of danger can arise wherein the absorbed energy is excessively converted into heat instead of other desired forms of energy (such as visible radiation or mechanical energy). Such a situation of danger is effectively invisible to the existing electrical safety devices.

In addition to what was stated, the existing electrical safety devices, by their nature, do not provide any protection against situations of danger which are determined, rather than by technical malfunctions, by an erroneous utilisation of the electrical appliances of the wiring system. For example, in a residential context, high-power appliances can forgetfully be left switched on (such as an electrical oven or a clothes iron). This may cause a risk of fire even in the absence of an electrical malfunction. An erroneous usage of the electrical appliances of the electrical wiring system is not in any manner detectable by the existing electrical safety devices.

For example, a known system monitoring the safety of an electrical wiring system by means of a microprocessor circuit is the subject of the US patent 8,310,370 B1. Said system involves the measurement of a plurality of voltages, currents and temperatures, aimed at identifying situations of danger such as overheating of the electrical board, disconnection of the neutral conductor and excessive current dispersion in the electrical wiring system. Said device is predicated upon the instantaneous measurement of a limited number of electrical variables, which represent a constrained subset of those well known to the technicians of the electrotechnical field and which are measured in a rather more complete manner, for example, by electrical network (power) quality analysers. As is known, these are devices which are capable of measuring a plurality of parameters which are derived from voltages and currents. Said devices, however, are limited to performing a series of measurements and making the corresponding values available to the user. They are therefore devoid of means for processing and carrying out a decision to disconnect the electrical wiring system from the distribution network.

The system described in the aforementioned prior patent furthermore processes a possible decision to disconnect the electrical wiring system based on a limited and predetermined set of algorithms, considering neither the decomposition of voltages and currents into frequency bands, nor the time course of activity within them, and as such is incapable either of learning the "profile" of individual behaviour of the loads connected to the electrical wiring system, or of performing any kind of adaptive monitoring.

US 2015/142196 A1 discloses an apparatus, a system, a method and a computer-readable medium for providing power controlling functionality to generate configurable power signals and to deliver power during fault conditions. In at least some embodiments, a power control unit can generate power signals having configurable attributes as a function of a mode of operation, a fault type, and the like.

In the system described in this patent application there is a mere measurement of voltages and currents in the time domain. Said system is therefore not able to perform a more complete and complex monitoring of the electrical wiring system.

US 6658360 discloses a fault current detection system. The detection system detects a fault current generated on a conductive path supplying power to an electric device and prevents the fault current from being supplied to the electric device. In particular, the detection system contains a detector, a switch, and a controller. The detector detects a fault current generated on the conductive path and outputs a corresponding detection signal. The controller inputs the detection signal and determines predetermined characteristics of the fault current based on said detection signal. Then, the controller identifies the fault current as a first type of fault current based on the predetermined characteristics and sets a trigger current to a first trigger current value when the fault current is identified as the first type of fault current. Also, the controller outputs a control signal to the switch to instruct the switch to isolate the electric device from the conductive network when the fault current is greater than the trigger current. In addition, a software program performed by the fault current detection system is also provided.

The system described in this patent, in all its possible embodiments, is based on measuring only the fault current, which corresponds in fact to the residual current measured by the existing residual current devices. This known system, measuring only one current and not decomposing it in multiple frequency bands, is intrinsically incapable of representing the behavior profiles of the electrical system and of the loads connected to it. In addition to this, as this known system is based on flowcharts, the same is also incapable of learning such profiles, and is devoid of abstraction and adaptability.

### Purposes of the invention

The purpose of the present invention is to overcome the aforementioned limitations by specifying an electrical safety device which is capable of automatically interrupting the supply of electric current to an electrical wiring system, or to part of it, upon the occurrence of electrical malfunctions in the electrical wiring system which, despite being potentially dangerous for the safety of persons and/or property, do not give rise to electrical overloads or current dispersions sufficient to trigger the intervention of thermal-magnetic circuit breakers or residual current devices. In particular, the present invention aims to overcome the aforementioned compromise between safety and functionality of the existing electrical safety devices by replacing the mere application of thresholds with a more complex analysis of an extended set of electrical magnitudes and of their spectral profile and time course, in particular detecting alterations of the electrical characteristics of the electrical wiring system caused by the aforementioned malfunctions.

A second purpose of the present invention is to provide protection against malfunctions of appliances of an electrical wiring system which do not give rise either to overloads or to anomalous increases in the total electrical dispersion current.

A third purpose of the present invention is to provide protection against situations of danger determined, rather than by technical malfunctions, by an erroneous utilisation of the electrical appliances of the wiring system.

A fourth purpose of the present invention is to provide protection against situations of secondary danger determined by environmental factors (such as a fire, a gas leak, a flooding or an earthquake) which, indirectly, may cause malfunctions in the electrical wiring system or be aggravated by the operation of the same.

### Summary of the invention

The subject of the present invention is an electrical safety device suitable for being connected between an electrical wiring system (or a part of it) and an electrical energy source including at least two active conductors, said device including:
- at least one switch interposed between the electrical wiring system and the electrical energy source when said device is connected between them;
- moving means of said switch between at least a first position corresponding to which the switch is closed (and consequently, the electrical wiring system is electrically connected to the electrical energy source), and a second position corresponding to which the switch is open (and the electrical wiring system is consequently electrically disconnected from the electrical energy source);
- controlling means of said moving means,
   wherein, according to the invention, the controlling means include:
   - for each active conductor of the electrical energy source, a first stage for measuring electrical voltages connected between the active conductor of the electrical energy source and the electrical wiring system when said device is connected between the electrical wiring system and the electrical energy source. Incidentally, with the expression "active conductor" we refer to a phase or neutral conductor;
   - for each active conductor of the electrical energy source, a second stage for measuring electric currents connected between the active conductor of the electrical energy source and the electrical wiring system when said device is connected between the electrical wiring system and the electrical energy source. In particular, by asserting that said first and second measurement stages are connected between the conductor of the electrical energy source and the electrical wiring system we intend both that the first and second measurement stage are connected in parallel between the conductor of the electrical energy source and the electrical wiring system, and that the first and second measurement stages are connected in series to each other, that is the second measurement stage is connected in series to the first measurement stage associated to the same conductor to which the second measurement stage is associated;
   - for each measurement stage, at least a third conditioning stage connected in cascade to said measurement stage, said third conditioning stage being adapted to break down the electrical activity of the electrical wiring system, as measured by the said first and second measurement stages, in a multitude of frequency bands, said third conditioning stage being furthermore adapted to rectify the aforementioned electrical activity and to calculate its time derivative and integral;
   - for each frequency band into which the electrical activity is broken down by means of said third conditioning stage, at least one analog-digital converter connected in cascade to the third conditioning stage;
   - a first memory adapted to store the values output by the aforementioned analog-digital converters;
   - a second memory adapted to store:
      - a plurality of predefined rules of an expert system, said rules being, for example, of the type:
         "if the electrical wiring system is in a condition determined by the combination of one or more thresholds, then a fact is true, otherwise it is false"
            and/or
         "if one or more first facts are simultaneously true, then a second fact is true"
            and/or
         "if, in a set of facts, one or more facts are true and simultaneously one or more other facts are false, then disconnect the electrical wiring system from the electrical energy source"
            and
      - a plurality of synaptic weights and/or transfer functions of a plurality of calculating units of a numerical classifier;
   - processing means adapted to process values stored in the first memory, said processing means including:
      - an expert system based on said rules and adapted to apply said rules to one or more values stored in the first memory, the expert system including one inference engine adapted to process at least one fact, that is a variable, dichotomously true or false, or possessing a continuous degree of trueness ranging between 0 and 1 (in case the rules are of the "fuzzy" type),
         the expert system being adapted to infer the trueness of one or more said facts by means of applying one or more thresholds, included in the aforementioned rules, to said values stored in the first memory, possibly combined with one or more other said facts, and to emit as output a decision to disconnect the electrical wiring system from the electrical energy source whenever it identifies a match between one or more said facts and at least one of the rules stored in the second memory. Incidentally, in case the rules of the expert system are of the "fuzzy" type, by asserting that the expert system is adapted to infer the trueness of one or more said facts by means of applying one or more thresholds it is meant that the expert system is adapted to infer the degree of trueness of one or more said facts through the application of one or more thresholds;
      - a numerical classifier including a plurality of calculating units whose synaptic weights and/or transfer functions correspond to the said synaptic weights and/or transfer functions stored in said second memory, the classifier being adapted to receive as input one or more values stored in the first memory, the classifier furthermore being adapted to emit a decision to disconnect the electrical wiring system from the electrical energy source as a function of the values received as input;
      - a training system supervising the classifier, said training system being connected to the first and to the second memory, and being adapted to store synaptic weights and/or transfer functions in the second memory. The training system furthermore being adapted to modify synaptic weights and/or transfer functions possibly already stored in the second memory;
   - emitting means of an alarm signal when the expert system or the classifier emit a decision to disconnect the electrical wiring system from the electrical energy source;
   - a processor adapted to process values assumed by parameters obtainable by means of algorithms having as input one or more of said values output by said analog-digital converters, said values calculated by the processor being suitable for storage in the first memory and for processing by the processing means,
      the processor being furthermore suitable for controlling the moving means in order to immediately determine a movement of the switch from the first to the second position whenever the expert system emits a decision to disconnect the electrical wiring system, without requesting the consent of a user of the device of the present invention,
      said controlling means comprising:
         - revoking means of a disconnection decision emitted by the classifier so as to prevent the processor from determining a movement of the switch from the first position to the second position, said revoking means being controllable by said user;
         - controlling means adapted to control the training means so as to modify at least one of the synaptic weights and/or of the transfer functions stored in the second memory on the basis of values stored in the first memory, said controlling means being controllable by said user,
      the processor, whenever the classifier emits a decision to disconnect the electrical wiring system, being furthermore adapted to:
         - command the emitting means in order to emit an alarm signal, and
         - command the moving means in order to determine a movement of the switch from the first position to the second position after a given time interval if, meanwhile, said decision to disconnect emitted by the classifier is not revoked by said user by means of the revoking means.

The electrical energy source is, for example, an electrical distribution network. If the electrical wiring system connected to the electrical distribution network by means of the device which is the subject of invention is of single-phase type, the electrical distribution network includes two active conductors: a neutral conductor and a phase conductor. If the electrical wiring system is three-phase, the electrical distribution network includes, usually, four active conductors: one neutral conductor and three phase conductors. If the electrical wiring system is of the direct-current type (such as found in certain telecommunications and/or data processing centres), the electrical energy source includes two active conductors: a forward and a backward current flow conductor.

Incidentally, when the switch of the device which is the subject of the invention is in the first position (that is when the switch is closed), the device which is the subject of the invention allows the supply of electric current to the electrical wiring system to which the device is connected. When the switch is in the second position (that is when the switch is open), the device which is the subject of the invention prevents the supply of electric current to the aforementioned electrical wiring system. A movement of the switch from the first to the second position therefore causes a disconnection of the electrical wiring system from the electrical energy source. Incidentally, with the expression "movement of the switch" we intend the operations of connecting and disconnecting the electrical wiring system to the electrical energy source, regardless of the mechanical or purely electronic nature of the same (for example in the case of a solid-state switch). Incidentally, whenever the device which is the subject of the invention carries out a movement of the switch from the first to the second position following a disconnection decision, an intervention by the user of the device is necessary to rearm the same, that is to return the switch to the first position.

Each of the electrical appliances present in an electrical wiring system (that is each of the loads supplied by the electrical energy source) possesses a characteristic profile of electrical behaviour which is defined, for example, by the maximum draw of electrical power, by the time course of the power draw, by non-idealities of the same such as reactance and asymmetry, by the degree of imbalance of the same in the case of three-phase systems, by the dispersion of electric current (possibly measurable separately as total dispersion, dispersion via the ground conductor and difference between the two), by injection into the electrical wiring system of disturbances consisting of harmonics of the network frequency, inter-harmonics or electromagnetic components at frequencies not related to the network frequency (also known as "conducted emissions", prevalently found in the interval between 230 Hz and 30 MHz and generated, for example, by the functioning of switching mode power supplies, or SMPS), and other interference, for example in the form of transients and flicker. It is on the basis of the profile of electrical behaviour of each appliance connected to the electrical wiring system that it is possible to define a scenario of the electrical wiring system at each time point. In particular, at each time point, what is measured by the device which is the subject of the invention represents the superposition of the behaviour of all electrical appliances connected to the electrical wiring system. Nevertheless, certain events, measured as changes of certain variables in time, can be associated to specific scenarios and possibly even to individual appliances.

As "scenario" of the electrical wiring system we therefore refer to a set of values or intervals of values that can be compared by the expert system and/or by the numerical classifier to corresponding values stored in the first memory, that is to corresponding values output by the analog-digital converters and/or to corresponding values taken by the aforementioned parameters (obtained applying to the said values specific measurement algorithms).

As will be better explained below in the present description, upon occurrence of anomalous events (acquired by means of the said measurement stages and recognised by the said processing means), the device which is the subject of the invention is capable of automatically interrupting the supply of electric current to the electrical wiring system. Said anomalous events may consist, for example, in electrical malfunctions potentially dangerous for the safety of persons and/or property which cause overloads or dispersions not sufficient to trigger the intervention of thermal-magnetic circuit breakers or residual current devices. When anomalous events of this type occur, the device which is the subject of the invention is therefore capable of ensuring the electrical safety of the electrical wiring system regardless of the presence of the thermal-magnetic circuit breakers and residual current devices (and possibly, in lieu of the same).

With reference, for example, to the aforementioned situation of danger, wherein as a consequence of a malfunction of an appliance of the electrical wiring system the same converts the absorbed electric power excessively into heat, while said anomaly does not give rise to overloads or anomalous increases of the total electrical dispersion current, it is often associated to rapid and/or persistent alterations of electrical properties of the electrical wiring system such as, for example, an increase in harmonic distortion and/or an increase in intensity of the high-frequency signals injected by the same through the conductors of the wiring system (conducted emissions) and/or an increase of the asymmetry and/or of the imbalance of current draw and/or a reduction of power factor and/or an increased intensity of disturbances, such as transient and flicker noise, and/or an increase in total electrical dispersion current or dispersion current flowing via the ground conductor, or significant difference between the two. The device which is the subject of the invention, unlike the existing electrical safety devices, is capable of detecting the aforementioned alterations and their time course and thus, if deemed appropriate, to disconnect the electrical wiring system from the distribution network.

It is appears evident that the combination of measuring the voltages and currents, with respective decomposition in multiple frequency bands and calculation of the electrical parameters by means of specific algorithms, and analysis of the corresponding time courses, together with a multifactorial and adaptive monitoring and an actuator capable of carrying out a disconnection decision, configure a device of completely new and different nature with respect to the current, known protection devices and to network analysers. Incidentally, it is known that rule-based expert systems and numerical classifiers have different and complementary features. In the case of expert systems, knowledge is represented explicitly and bound to a well-defined set of rules. As a consequence of this, the behaviour of an expert system is easily predictable, but its adaptive ability is limited. In the case of numerical classifiers, knowledge is represented in an implicit manner, that is by means of synaptic weights and/or transfer functions, therefore the behaviour of the system may be difficult to represent and predict, however the ability to adapt is maximal. The device which is the subject of the present invention, in some of its variants, combines in a synergistic manner the acquisition of an extended set of electrical variables with the complementary features of the aforementioned processing means.

Further innovative characteristics of the present invention are described in the dependent claims.

According to one aspect of the invention, the controlling means includes a clock-calendar. In that case, the expert system is capable of determining the trueness of facts also as a function of a time and/or date as measured by the aforementioned clock-calendar or as a function of a time interval as measured by the aforementioned clock-calendar. Similarly, the numerical classifier, if present, is adapted to process values stored in the first memory based on one or more synaptic weights and/or transfer functions stored in the second memory as a function of a time and/or date as measured by the aforementioned clock-calendar or as a function of a time interval as measured by the aforementioned clock-calendar. It is here reminded that the "synaptic weights" are variables associated to each link between units of a network and the "transfer functions" are mathematical functions which relate in a linear or nonlinear manner the input and output values of each network unit.

The training system is adapted to store one or more synaptic weights and/or transfer functions in the second memory linking them to a time and/or a date as measured by the said aforementioned clock-calendar or linking them to a time interval as measured by the aforementioned clock-calendar. The training system is furthermore adapted to modify one or more synaptic weights and/or transfer functions stored in the second memory as a function of a time and/or date as measured by the aforementioned clock-calendar or as a function of a time interval measured by the aforementioned clock-calendar, or liking them to a time and/or a date as measured by the said aforementioned clock-calendar or linking them to a time interval as measured by the aforementioned clock-calendar.

Upon installation of the device which is the subject of the invention, the second memory preferably does not contain any synaptic weight nor transfer function. The training system creates a multitude of synaptic weights and/or transfer functions depending on time, for example, on a daily or weekly basis. The synaptic weights and/or transfer functions stored are thereafter continuously updated by means of successive approximations. The scenarios of the electrical wiring system to which the device which is the subject of the invention is connected are therefore autonomously learned by the same. What has been indicated allows, for example, to learn if certain high-power devices (such as, for example, electrical ovens or other thermo-electrical devices) are connected to the system and, if so whether the same usually remain disconnected from the system in given time slots, or remain connected to the same only for time intervals under a certain value, and consecutively to identify an "atypical" usage of the same, possibly revealing an error and therefore a situation of potential danger. According to another aspect of the invention, the rules of the expert system are of "fuzzy" type, that is the facts are not dichotomously true or false, but possess a continuous degree of trueness ranging between 0 and 1. In that case, the expert system is therefore capable of performing a "weighed" evaluation of the state of the electrical wiring system, and therefore of carrying out disconnection decisions based on the degree of match between values stored within the first memory and the rules of the same.

According to another aspect of the invention, the expert system is of adaptive type, that is it is supervised by a further training system connected to the first memory and adapted to modify its own thresholds (included in the rules stored in the second memory).

In other words, according to this aspect of the invention, the processing means furthermore include:
- a further training system supervising the expert system, said further training system being connected to the first and second memory, and being adapted to modify the aforementioned thresholds.

In addition to that, when the controlling means include a clock-calendar, said further training system is adapted to modify the aforementioned thresholds as a function of a time and/or date as measured by the aforementioned clock-calendar or as a function of a time interval as measured by the aforementioned clock-calendar.

According to another aspect of the invention, the controlling means furthermore include a fourth stage for measuring the total electrical dispersion current, said fourth stage being connected between all active conductors of the electrical energy source and the electrical wiring system when the device is connected between the electrical energy source and the electrical wiring system, the controlling means including one of the aforementioned third conditioning stages connected in cascade to such fourth measurement stage (and consequently also at least one analog-digital converter connected in cascade to this last third conditioning stage).

Incidentally, if the total electrical dispersion current (which, as is known, is given by the sum of all currents in the active conductors) is equal to zero, then the dispersion is zero. If instead the total electrical dispersion current is greater than zero, there is a measurable dispersion, regardless of whether that this takes place via the ground conductor (for example due to an internal malfunction of the isolation of an appliance connected to the ground conductor) or through another path (for example because a person or a non-isolated object have come into contact with a conductor at non-zero potential with respect to the ground). Incidentally, the total electrical dispersion current corresponds to the variable measured by the usual residual current devices, which carry out a disconnection when a given threshold is exceeded.

Incidentally, if the device which is the subject of the invention includes the fourth measurement stage, the second stage is preferentially connected in series to the electrical wiring system not directly but through the fourth measurement stage.

According to another aspect of the invention, the controlling means include a fifth stage for measuring the electrical dispersion current passing through the ground conductor, said fifth stage being connected between the ground conductor of the electrical energy source (in electrical wiring systems of the TN type) and the ground conductor of the electrical wiring system when the device is connected between the electrical energy source and the electrical wiring system, the controlling means including one of said third conditioning stages connected in cascade to the fifth measurement stage (and, consequently, at least one analog-digital converter connected in cascade to this last third conditioning stage).

Incidentally, in electrical wiring systems of the TT or IT (rather than TN) type, with the expression "ground conductor of the electrical energy source", we refer to the conductor connected to one or more ground electrodes installed locally.

It is here reminded that in electrical wiring systems of the TT and IT types the ground connection of the electrical wiring system is realised by means of one or more ground electrodes installed locally (that is in proximity of the wiring system itself), whereas the ground connection of the electric substation and/or generator is realised by means of one or more ground electrodes that are remote, installed locally at the substation or generator. In electrical wiring systems of the TN type, the ground connection of the electrical wiring system is instead realised in a direct manner by means of a conductor leading to the electrical substation and/or generator, where the same is connected to one or more ground electrodes. Depending on the configuration, said conductor may correspond to the neutral one or may be split from the same at a given point.

Incidentally, allowing for measurement tolerance, the dispersion current flowing through the ground conductor is by definition always smaller or at most equal to the total electrical dispersion current. As previously specified, the separate measurement of the two variables may allow an improved characterisation of the integrity of the isolation of the electrical wiring system and of the appliances connected to the same with respect to the mere measurement of the total electrical dispersion current (as performed by the existing safety devices usually installed in residential contexts).

According to another aspect of the invention, the controlling means include, for each of the active conductors:
- means for attenuating signals at frequencies not lower than 250 Hz, connected between said conductor and the electrical wiring system when the device which is the subject of the invention is connected between the same.

Advantageously, as shall be explained subsequently in the present description, by appropriately measuring voltages upstream and downstream of the attenuating means it is possible to establish whether a given aspect of high-frequency electrical activity or conducted emissions has its source within the electrical power energy source or within the electrical wiring system.

The device which is the subject of the invention differentiates itself from the aforementioned network quality analysers by means of:
- the usage of a broad set of electrical measurements (and corresponding time courses) on distinct frequency bands and by means of multiple algorithms, with the purpose of autonomously taking and carrying out a decision to disconnect the electrical wiring system,
- the ability to process in an autonomous manner the disconnection decision by means of complex and adaptive analysis performed by means of a rule-based expert system and/or a numerical classifier, preferably consisting of a neural network, which also take into account the "individual" features of the specific electrical wiring system, that is the behaviour profiles of the appliances connected to it and their overlap;
- being provided with own means to carry out the disconnection decision.

In one or more of its variants (illustrated in detail further down in the present description), the device which is the subject of the invention differentiates itself from said analysers also by means of:
- the presence of a filter allowing to establish whether certain components of high-frequency activity originate within the electrical wiring system (downstream of the device) or within the distribution network (upstream of the device);
- the presence of measurement stages adapted to separately measure the total electrical dispersion current, the current dispersion through the ground connector and the difference between the two;
- the consideration of the daily and hourly course of usual activity of the system with the purpose of supporting the identification of anomalous situations;
- the inclusion of and/or the being inter-connectable to sensors adapted to detect the occurrence of situations of secondary electrical risk, caused for example by events such as earthquakes, fires, gas leaks and flooding.

With respect to the monitoring system subject of the aforementioned US patent 8,310,370 B1, the device which is the subject of the invention includes a complex set of stages for conditioning and filtering the voltage and current signals into multiple frequency bands. In addition to that, said known system:
- is devoid of classifiers, related training systems, and means allowing the user to control the training process;
- is devoid of an expert system and is instead controlled by a predefined set of elementary rules which do not allow representing the state of the electrical wiring system by means of facts, are not changeable adaptively and are not applicable in a "fuzzy" manner;
- is devoid of integrators and differentiators aiming to make possible a more detailed analysis of the time course of the parameters of interest and of the activity in the measured frequency bands;
- is not capable of processing disconnection decisions based on behaviour profiles specific to certain times and days, and as such representative of the normal usage situation of the specific electrical wiring system;
- is devoid of sensors adapted to detect potential sources of secondary electrical danger, that is danger following actual or potential damage to the electrical wiring system and to the appliances connected to it, caused for example by an earthquake or by a fire;
- is devoid of measurement stages adapted to measure separately the total electrical dispersion current, the current dispersion by means of the ground conductor and the difference between the two;
- is devoid of means for attenuating the high-frequency electrical activity capable of supporting the determination of the source of high-frequency conducted emissions.

### Brief description of the figures

Further purposes and advantages of the present invention shall become clear upon the detailed description which follows of an example realisation of the same and of the attached diagrams, which are given purely as examples and not as limitations, wherein:
- **figure 1** shows, schematically, the device which is the subject of the invention connected between an electrical distribution network and an electrical wiring system;
- **figure 2** shows, schematically, one component of the device in figure 1;
- **figure 3** shows, schematically, a first measurement stage of the component in figure 2;
- **figure 4** shows, schematically, a second measurement stage of the component in figure 2;
- **figure 5** shows, schematically, a third conditioning stage of the component in figure 2;
- **figure 6** shows, schematically, a variant of the stage in figure 5;
- **figure 7** shows, schematically, a first variant of the component in figure 2 not part of the present invention;
- **figure 8** shows, schematically, a second variant of the component in figure 2;
- **figure 9** shows, schematically, a third variant of the component in figure 2;
- **figure 10** shows, schematically, a fourth variant of the component in figure 2;
- **figure 11** shows, schematically, a fifth variant of the component in figure 2;
- **figure 12** shows, schematically, a fourth measurement stage of the component in figure 11;
- **figure 13** shows, schematically, a sixth variant of the component in figure 2;
- **figure 14** shows, schematically, a fifth measurement stage of the component in figure 13;
- **figure 15** shows, schematically, a seventh variant of the component in figure 2;
- **figure 16** shows, schematically, an eighth variant of the component in figure 2.

### Detailed description of some preferred forms of realisation of the invention

In the remaining part of the present description, a figure could be illustrated also with reference to elements not explicitly indicated in the that figure but in other figures. The scale and proportions of the various elements shown do not necessarily correspond to the actual ones.

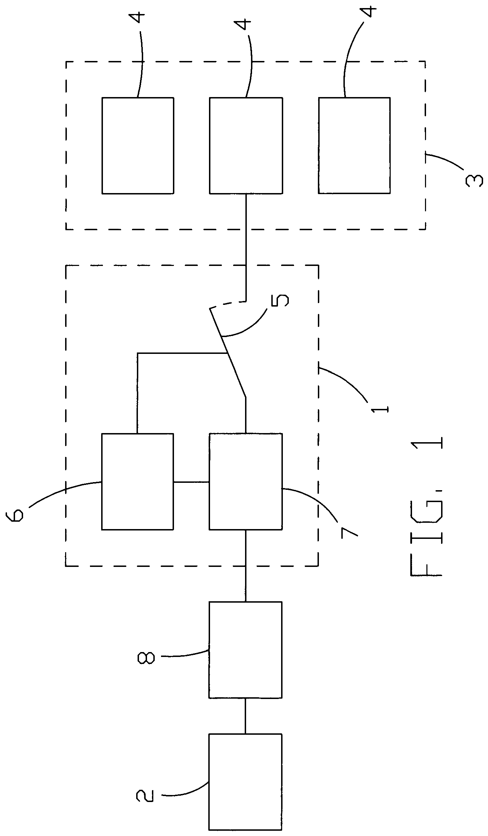

**Figure 1** shows an electrical safety device 1 connected between an electrical energy source 2 and an electrical wiring system 3 including a plurality of electrical appliances (or "electrical loads") 4 connected one to another by means of electrical conductors. As an example, the source 2 is an electrical distribution network and the electrical wiring system 3 is provided with further electrical safety devices 8 of known type, such as a thermal-magnetic circuit breaker and/or a residual current device. The devices 8 are preferably interposed between the distribution network 2 and the device 1.

For ease of explanation, the device 1, which is the subject of the invention, will be herein illustrated with reference to the case wherein it serves as interface between the distribution network 2 and the entire electrical wiring system 3. Given the above, all the statements that follow extend equivalently to the case wherein the device 1 is connected only to part of the electrical wiring system 3 (that is to a circuit of the same) and/or to an electrical energy source which is not a distribution network.

The device 1 includes an electrical switch 5 which can be opened and closed by means of a suitable actuator 6 of known type which serves as automatic moving means of the switch 5 (that is it does not require any intervention by the user). Incidentally, when the switch 5 is closed, the electrical wiring system 3 is connected to the distribution network 2 and the appliances 4 are electrically supplied. When the switch 5 is open, the electrical wiring system 3 is isolated from the distribution network 2. For example, the actuator 6 may consist of a relay switch (or other known electromagnetic actuator equivalent to it) capable of opening and closing the switch 5. Alternatively, the switch 5 could consist of a solid-state switch, that is it could be capable of realising a connection and a disconnection without any movement of mechanical elements. The device 1 furthermore includes a multitude of electrical and electronic components which will be illustrated in detail in the following figures and which serve, altogether, as control unit 7 of the actuator 6. More precisely, the control unit 7 is adapted to command the opening of the switch 5 (that is, the disconnection of the electrical wiring system 3 from the network 2) upon occurrence of certain conditions. Incidentally, if the electrical wiring system 3 is single-phase, there are two active conductors which go through the switch 5: the phase and the neutral conductor. In case the electrical wiring system 3 is three-phase, there are four active conductors which go through the switch 5: the three phase conductors and the neutral conductor.

According to a variant of the device 1, the switch 5 and the actuator 6 are embedded within the devices 8. According to this variant, the control unit 7 is therefore capable of disconnecting the electrical wiring system 3 from the distribution network 2 by means of the devices 8 possibly already present. More precisely, if one or more of the devices 8 includes a release coil that is externally controllable, the control unit 7 is preferably electrically connected to it in such manner as to be able to activate it in order to carry out a disconnection of the electrical wiring system 3 from the distribution network 2. In that case, the release coil serves the role of the actuator 6. The switch 5 instead is represented by the device 8 of which the coil forms part (for example a thermal-magnetic circuit breaker or a residual current device).

According to another variant of the device 1, the switch 5 is included in the devices 8 (for example, in the form of a pre-existing thermal-magnetic circuit breaker and/or residual current device). Also according to this variant, the control unit 7 is therefore capable of disconnecting the electrical wiring system 3 from the distribution network 2 by means of the devices 8. More precisely, the actuator 6, consisting, for example, of a motorised servo-mechanism, is mechanically coupled to one or more safety devices 8 that are already present in such manner as to be able to activate them to carry out the disconnection of the electrical wiring system 3 from the distribution network 2.

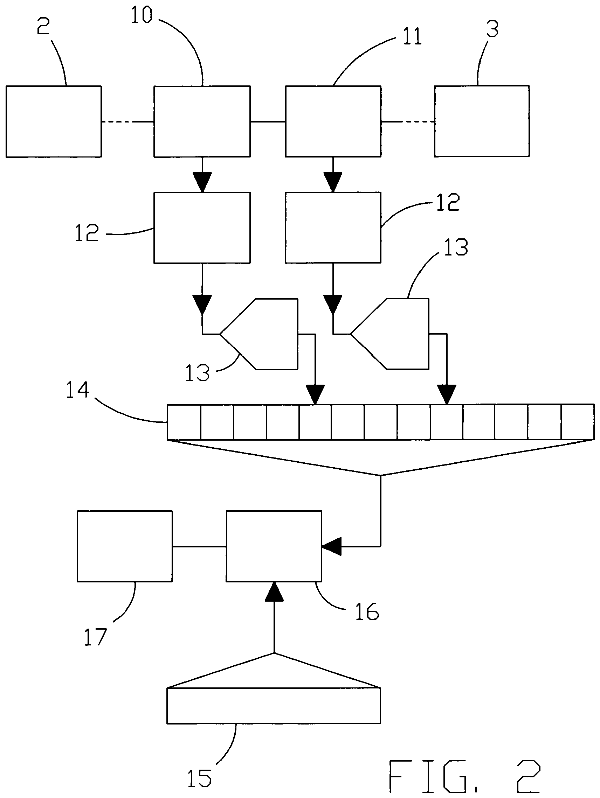

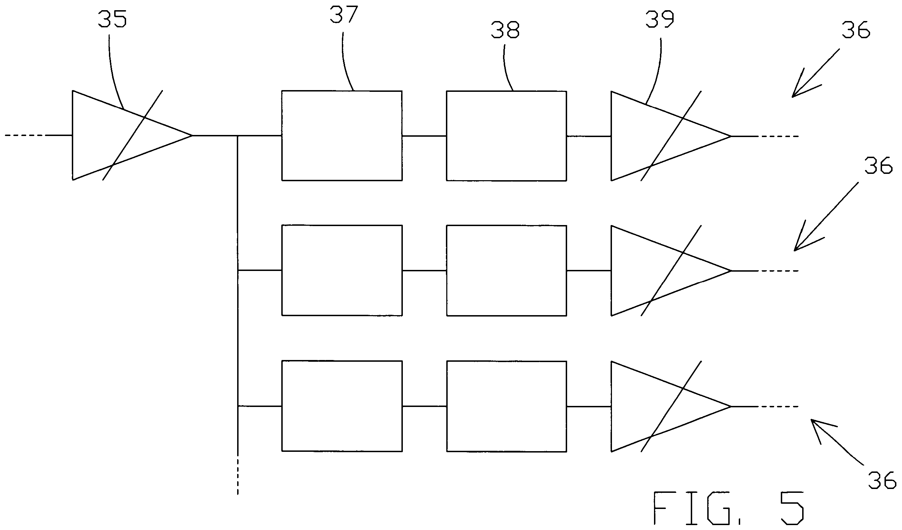

With reference to **figure 2****,** the control unit 7 includes, for each active conductor of the distribution network 2, a first stage 10 for measuring electrical voltages and a second stage 11 for measuring electric currents connected between the conductor of the distribution network 2 and the electrical wiring system 3. In figure 2, the stages 10 and 11 are shown connected in series one to another. In an equivalent manner (not shown) they could be connected in parallel between the conductor of the distribution network 2 and the electrical wiring system 3. The control unit 7 furthermore includes at least a third electrical conditioning stage 12 connected in cascade to each of the aforementioned measurement stages 10 and 11. As will appear evident in the description of figure 5, each conditioning stage 12 is adapted to break down the electrical activity of the electrical wiring system 3, as measured by the measurement stages 10 and 11, in a multitude of frequency bands. Each conditioning stage 12 is furthermore preferably adapted to rectify the aforementioned electrical activity and to calculate its time derivative and interval.

The control unit 7 furthermore includes at least one analog-digital converter 13 connected in cascade to each conditioning stage 12. More precisely, it is for each frequency band into which the electrical activity of the electrical wiring system 3 is broken down by each conditioning stage 12, that the control unit 7 includes at least one analog-digital converter 12 connected in cascade to the conditioning stage 12.

The control unit 7 furthermore includes a first and a second memory respectively marked with reference numbers 14 and 15. The memory 14 is connected to the analog-digital converters 13 and includes a plurality of cells wherein it is possible to store both the values output by the aforementioned converters 13, and values taken by parameters obtainable (that is computable) through algorithms having as input one or more values output by the analog-digital converters 13.

For example, if the electrical wiring system 3 is of alternating-current type, two of the values output by the converters 13 may respectively correspond to the instantaneous voltage and current, of line and dispersion (total or through the ground conductor), of the fundamental frequency (for example 50 Hz) and its second and third harmonics (for example 100 and 150 Hz). Some of the aforementioned parameters obtainable by means of algorithms may instead consist in the ratio between the total absorbed current and the dispersion current (total or through the ground conductor), in the difference between the dispersion current through the ground conductor and the total electrical dispersion current, in the power factor (or, in a substantially equivalent manner, in the efficacious, reactive and apparent power), in the degree of asymmetry and/or imbalance (in the case of three-phase systems) of voltage and/or current, in the total content of harmonics (preferably quantified in terms of "total harmonic distortion", THD), in the total content of high-frequency signals not correlated to the network frequency (that is of conducted emissions), and in the presence of disturbances of the transient and flicker type (preferably quantified in terms of short and long duration flicker).

The memory 15 is adapted to store a plurality of predetermined rules of an expert system 16 included in the control unit 7 and connected to the memory 14. The expert system 16 is based upon the rules stored in the memory 15 and is equipped with an inference engine. The rules of the expert system 16 are, for example, of the type:
"if the electrical wiring system 3 is in a condition determined by the combination of one or more thresholds, then a fact is true, otherwise it is false"
   and/or
"if one or more first facts are simultaneously true, then a second fact is true" and/or
"if, in a set of facts, one or more facts are true and simultaneously another one or more other facts are false, then disconnect the electrical wiring system 3 from the distribution network 2."

The expert system 16 is adapted to apply the aforementioned rules to one or more values stored in the memory 14 and includes at least one fact, that is one variable, for example, dichotomously true or false, or which possesses a continuous degree of trueness included between 0 and 1 (in case the rules are of the "fuzzy" type). The expert system 16 is adapted to infer the trueness of one or more of the aforementioned facts by means of applying one or more thresholds (included in the rules stored in the memory 15) to the values stored in the memory 14, possibly in combination with one or more other facts, in order to emit a decision to disconnect the electrical wiring system 3 from the distribution network 2 when it detects a match between one or more of the aforementioned facts and at least one rule stored in the memory 15. More precisely, the expert system 16 is adapted to determine the trueness of one or more facts by means of the aforementioned thresholds and thus to process the aforementioned facts by means of the inference engine with the purpose of reaching a disconnection decision.

In other words, by means of the set of thresholds included in the rules stored in the memory 15, the values stored in the memory 14 are used to determine the trueness of a set of facts, on the basis of which a possible disconnection decision is processed by means of an inference engine. The rules storable in the memory 15 therefore correspond to the rules on which the expert system 16 is based. The latter therefore serves the role of means of processing the values stored in the memory 14. Incidentally, the processing of a disconnection decision is therefore not reducible to the mere application of thresholds, but is rather mediated by the assertion of one or more facts, determined on the basis of values stored in the memory 14 and subsequently combined by means of specific rules that represent the knowledge coded within the device 1.

The rules of the expert system 16 may be of the "fuzzy" type. In that case, the facts are not dichotomously true or false, but rather possess a continuous degree of trueness included between 0 and 1. Thanks to this, the expert system 16 is capable of performing a "weighted" evaluation of the state of the electrical wiring system 3, and therefore of carrying out disconnection decisions on the basis of the degree of match between the values stored in the memory 14 and the rules of the same.

The control unit 7 furthermore includes a processor 17 adapted to impart to the actuator 6 a command to open the switch 5 whenever the expert system 16 emits a decision to disconnect the electrical wiring system 3 from the distribution network 2. The memory 14 is, preferably, a RAM (Random Access Memory) memory with which the processor 17 is equipped. The memory 15 is, preferably, a non-volatile memory, preferably of "EEPROM" (that is Electrically Erasable Programmable Read Only Memory) or "FLASH" type.

Incidentally, it is the processor 17 which calculates, by means of algorithms, the aforementioned parameters that can be stored in the cells of the memory 14 and that can be calculated starting from one or more values output by the analog-digital converters 13.

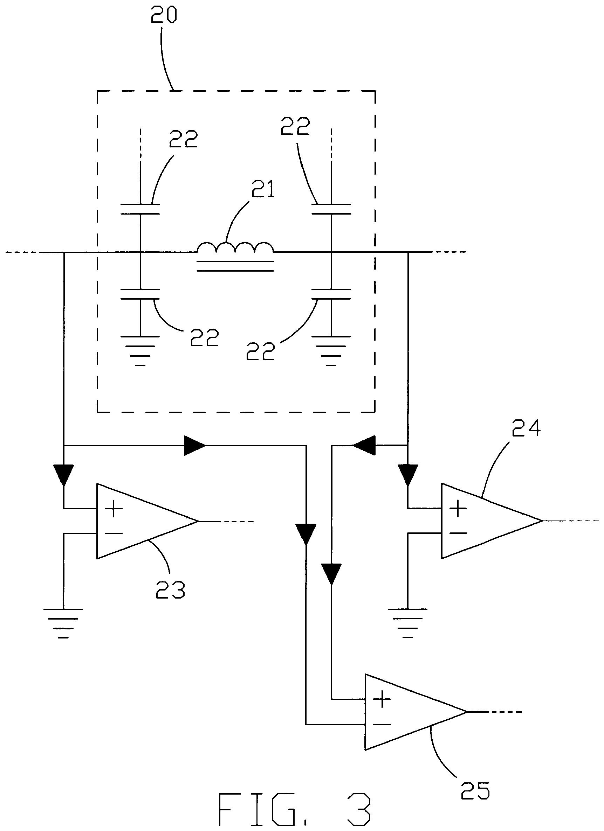

With reference to **figure 3****,** the control unit 7 includes, for each of the aforementioned measurement stages 10 (and therefore for each active conductor of the distribution network 2), a unit 20 connected between the conductor of the distribution network 2 and the electrical wiring system 3 for the attenuation of common-mode signals at frequencies that are high with respect to the network frequency. Said attenuating unit 20 is also known as "electromagnetic interference filter" or "EMI filter". More precisely, the unit 20 is preferably adapted to attenuate signals at frequencies not lower than 250 Hz. The attenuating unit 20, for filtering the common-mode interferences (conducted emissions), includes an inductor 21 connected between the conductor of the distribution network 2 and the electrical wiring system 3, and attenuation capacitors 22, on both sides of the inductor 21, between all possible combinations of conductors of the distribution network 2 (that is, for example, in a single-phase system between phase and neutral, between phase and ground and between neutral and ground; in a three-phase system with four conductors between phase 1 and phase 2, between phase 1 and phase 3, between phase 2 and phase 3, between phase 1 and neutral, between phase 2 and neutral, between phase 3 and neutral, between phase 1 and ground, between phase 2 and ground, between phase 3 and ground and between neutral and ground). The inductor 21 is magnetically coupled with the other inductors 21 of the other conductors of the distribution network 2. More precisely, the inductors 21 behave, altogether, as a sort of transformer through which all active conductors of the distribution network (therefore excluding the ground conductor) enter and exit.

Again with reference to **figure 3****,** each of the aforementioned measurement stages 10 includes:
- a first amplifier 23 connected to one side of the attenuating unit 20 (associated with the same conductor of the distribution network 2 to which the measurement stage 10 is associated) for measuring a voltage difference between the said first side and the ground potential;
- a second amplifier 24 connected to a second side of the attenuating unit 20 (associated to the same conductor of the distribution network 2 to which the measurement stage 10 is associated) for measuring a voltage difference between said second side and the ground potential;
- a third amplifier 25 connected to both sides of the attenuating unit 20 (associated to the same conductor of the distribution network 2 to which the measurement stage 10 is associated) for measuring a voltage difference between the two aforementioned sides of the attenuating unit.

The voltages output by the amplifiers 23 and 24 are therefore proportional to the input and output voltages of the attenuating unit 20. The voltage output by the amplifier 25 instead is proportional to the difference between the aforementioned input and output voltages of the attenuating unit 20. The voltage output by the amplifier 25 is extremely much smaller than the voltages output by the amplifiers 23 and 24. It is therefore amplified in a different manner.

Each of the amplifiers 23, 24 and 25 is preferably equipped with suitable voltage reduction circuits and, where appropriate, means of galvanic isolation. The control unit 7 includes one of the conditioning stages 12 connected in cascade to each of the amplifiers 23, 24 and 25 (and consequently at least one of the analog-digital converters 13 connected in cascade to the conditioning stage 12). As will be illustrated in greater detail further down in the present description, the presence of the attenuating unit 20 and the corresponding voltage measurements allow establishing whether a certain aspect of the high-frequency electrical activity or conducted emissions has its source upstream or downstream of the device 1, that is in the distribution network 2, or in the electrical wiring system 3. This discrimination allows the processor 17, by means of the expert system 16 (and/or, as will be explained later, of a numerical classifier 45), to decide whether to ignore the aforementioned high-frequency electrical activity (because it originates from the distribution network 2) or possibly open the switch 5 (in case high-frequency electrical activity originates from within the wiring system 3 and is considered anomalous). Incidentally, the presence of the attenuating unit 20 exerts a protective effect with respect to the electrical wiring system 3 and its appliances 4 by protecting them, at least partially, from high-frequency interference (conducted emissions) originating from the distribution network 2.

According to a variant of the measurement stage 10, the aforementioned first electrical voltage measurement stages are devoid of the amplifier 25. In other words, this last amplifier is optional because the purpose of the attenuating unit 20 may be reached, even though with lower performance, also just through the amplifiers 23 and 24, by calculating the difference between the corresponding voltages using suitable circuits connected downstream of them or numerically (via software within the processor 17).

According to another variant of the measurement stage 10, the aforementioned first electrical voltage measurement stages are devoid of the attenuating unit 20 and of the amplifiers 24 and 25. The usefulness of the attenuating unit 20 is in fact specifically related to the application scenario for the device which is the subject of the invention, and of the desired sensitivity with respect to the analysis of high-frequency electrical activity.

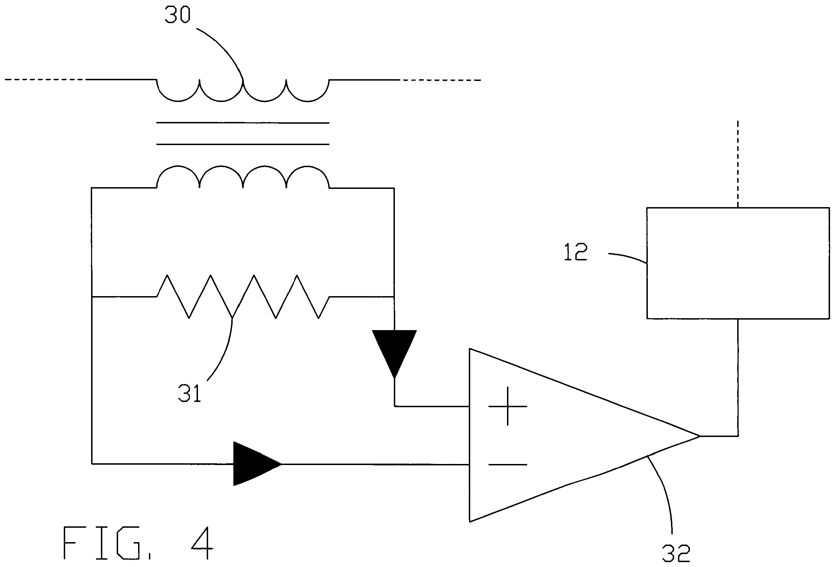

With reference to **figure 4****,** each of the aforementioned measurement stages 11 includes:
- a first transformer 30 for measuring the electric current connected between the conductor of the distribution network 2 and the electrical wiring system 3, and coupled to a first load resistor 31;
- a fourth amplifier 32 connected to both sides of the resistor 31 for measuring a voltage difference between the same.

Similarly to what was stated for the amplifiers 23, 24 and 25, each of the amplifiers 32 is preferably equipped with suitable circuits for attenuating or amplifying the voltage. The control unit 7 includes one of the conditioning stages 12 connected in cascade to each of the amplifiers 32 (and consequently at least one of the analog-digital converters 13 connected in cascade to the conditioning stage 12).

Summarizing, the conditioning stages 12 (and the analog-digital converters 13 respectively connected in cascade to the same) are instanced for each signal measured by the control unit 7, that is: for each of the voltages measured by each stage 10 (and therefore for each of the voltages measured for each conductor of the distribution network 2) and for the load current measured by each stage 11 (and therefore for the load current measured on each conductor of the distribution network 2). In other words, the measurement stages 10 and 11 measure signals that can be stored in the memory 14 by means of the respective conditioning stages 12 (and of the respective analog-digital converters connected in cascade to the same).

As is known, while the measurement of a current by means of a transformer 30 is applicable only to alternating-current circuits, the measurement of the same by means of a voltage drop across a resistor is applicable to both alternating-current and direct-current circuits. Given the above, according to a variant of the measurement stage 11, the aforementioned second electric current measurement stages are devoid of the transformer 30. According to this variant, not shown in the figures, the resistor 31 is directly connected between the conductor of the distribution network 2 and the electrical wiring system 3, and the amplifier 32 may be equipped with suitable means of galvanic isolation.

According to another variant of the measurement stage 11, the aforementioned second electric current measurement stages are devoid of the transformer 30 and, in lieu of the same, the load resistor 31 and amplifier 32, in a manner not illustrated in the figures, are connected to a similar transformer located externally to device 1, and possibly already included in the electrical safety devices 8 or in the measurement devices already known and present (such as the so-called "power meter").

According to another variant of the measurement stage 11, each of the aforementioned second electric current measurement stages is devoid of the transformer 30 (and of the amplifier 32) and, in lieu of the said transformer 30, includes a section of conductor in proximity to which a magnetic field sensor has been installed, preferably a Hall effect sensor (in a manner not illustrated in the figures).

With reference to **figure 5****,** each of the aforementioned conditioning stages 12 includes:
- a first variable gain amplifier 35 connected in cascade to one of the differential amplifiers 23, 24, 25 and 32. More precisely, the control unit 7 includes a variable gain amplifier 35 connected in cascade to each of the differential amplifiers 23, 24, 25 and 32. The variable gain amplifiers 35 are adapted to bring the voltage into an range suitable for maximising the sensitivity of device 1 without incurring saturation;
- a plurality of instances of conditioners 36, that is a plurality of sets of components, each set (that is each instance) including:
   - a band-pass filter 37 at variable frequency connected in cascade to the variable gain amplifier 35;
   - a rectifier 38 connected in cascade to the band-pass filter 37;
   - a second variable gain amplifier 39 connected in cascade to the rectifier 38.

The control unit 7 includes one of the analog-digital converters 13 for each of the instances of the conditioners 36. More precisely, each of the analog-digital converters 36 is connected in cascade to each of the variable gain amplifiers 39.

The band-pass filters 37 are configured in such manner as to allow an optimal representation of the spectrum of the electromagnetic activity present on the electrical wiring system 3. The variable gain amplifiers 39 are configured in such manner as to allow an optimal utilisation of the dynamic range of the analog-digital converters 13 connected in cascade to the same, with consideration given to the different intensity of activity in the various frequency bands. For example, the intensity of the principal frequency and of its first harmonics shall be much higher than that of other components at higher frequency or, in other means not trivially related to them (that is, for example inter-harmonics and conducted emissions).

The number of instances of conditioners 36 depends upon the number of frequency bands that one intends to monitor that is, ultimately, upon the complexity of the classification of the electrical loads 4 of the electrical wiring system 3 that one wants to realize. Preferably, the number of instances of the conditioners 36 of each conditioning stage 12 is included between 3 and 10. Given the above, the voltages are generally measurable up to frequencies much higher with respect to those for which the currents are measurable (due to the non-ideal characteristics of the transformers 30). The conditioning stages 12 connected in cascade to the amplifiers 23, 24 and 25 therefore preferably have a number of instances of the conditioners 36 that exceeds the number of instances of the conditioners 36 of the conditioning stages 12 connected in cascade to the amplifiers 32.

According to a variant of the conditioning stage 12, the rectifier 38 includes a low-pass filter configured in such manner that the output of the rectifier 38 is not half-wave, but a direct-current voltage corresponding to the average value of the rectified signal.

According to another variant of the conditioning stage 12, one or more instances of the conditioners are devoid of the rectifiers 38. According to this variant, the amplifiers 39 are therefore connected in cascade directly to the band-pass filters 37. Said variant becomes necessary to allow the calculation, by means of the processor 12, of parameters obtained by means of algorithms which require the analysis of the actual sine-waves of voltage and current, such as, for example, the measurement of the power factor.

According to another variant of the conditioning stage 12, the conditioning stages are devoid of the instances of the conditioners 36. According to this variant, each of the conditioning stages 12 consists of one of the aforementioned variable gain amplifiers 35. The device which is the subject of the invention includes, in this case, one of the analog-digital converters 13 for each of the conditioning stages 12. More precisely, each of the analog-digital converters 13 is connected in cascade to each of the amplifiers 35. According to this variant, the effect of the conditioning stages 36 is preferably simulated in software (digitally), by means of corresponding numerical filters preferably implemented within the processor 17.

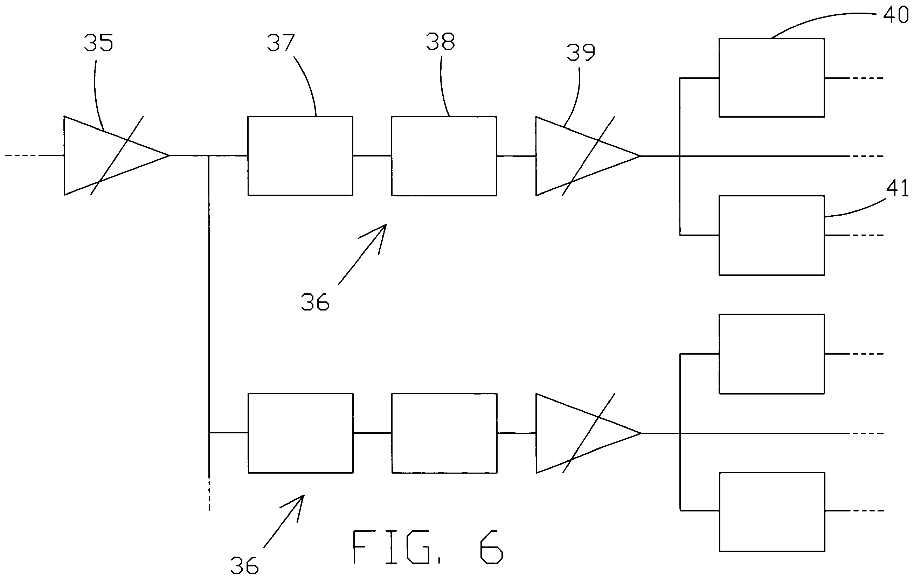

For example, the conditioning stages 12 can be implemented by means of discrete components, or preferably, by means of a dedicated ASIC (that is, Application Specific Integrated Circuit) integrated circuit and/or by means of an FPAA (that is, Field Programmable Analog Array) analog programmable device. **Figure 6** shows a variant of the conditioning stage 12, possibly devoid of the rectifier 38, which differs from the stage shown in figure 5 in the fact that it furthermore includes, for each instance of the conditioners 36:
- a differentiator 40 connected in cascade to the amplifier 39. According to this variant, the device which is the subject of the invention includes one of the analog-digital converters 13 for each of the differentiators 40. More precisely, each of the analog-digital converters 13 is connected in cascade to each of the differentiators 40;
   and/or
- an integrator 41 connected in cascade to the amplifier 39. According to this variant, the device which is the subject of the invention includes one of the analog-digital converters 13 for each of the integrators 41. More precisely, each of the analog-digital converters 13 is connected in cascade to each of the integrators 41.

Incidentally, if the conditioning stages include both differentiators 40 and integrators 41, the device which is the subject of the invention includes three analog-digital converters 13 for each instance of the conditioner 36, that is one connected in cascade directly to the amplifier 39, one connected in cascade to the differentiator 40 and one connected in cascade to the integrator 41.

The differentiators 40 and the integrators 41 advantageously allow identifying both rapid changes in the characteristics of electromagnetic activity of the electrical wiring system 3, and slow but persistent changes.

Incidentally, should the differentiators 40 and the integrators 41 be absent, their function could be simulated, in a known manner, in software (digitally), insofar as the performance of the analog-digital converters 13 and of the processor 17 allow doing so. In addition to that, regardless of the presence of the differentiators 40 and the integrators 41, differentiation and integration operations can be performed digitally by the processor 17 on values taken by the aforementioned parameters that can be calculated by means of algorithms having as input one or more values output by the analog-digital converters 13.

According to a variant of the conditioning stage 12, one or more differentiators 40 and/or integrators 41 are connected directly to the respective rectifiers 38 or, should these not be present, directly to the respective band-pass filters 37. In this variant, each instance of the conditioners 36 may include a multitude of amplifiers 39 respectively connected both downstream of the band-pass filters 37 and/or of the rectifiers 38, and downstream of the differentiators 40 and/or of the integrators 41. This variant of the invention provides, under suitable circumstances, a further optimisation of the dynamic range of the analog-digital converters 13.

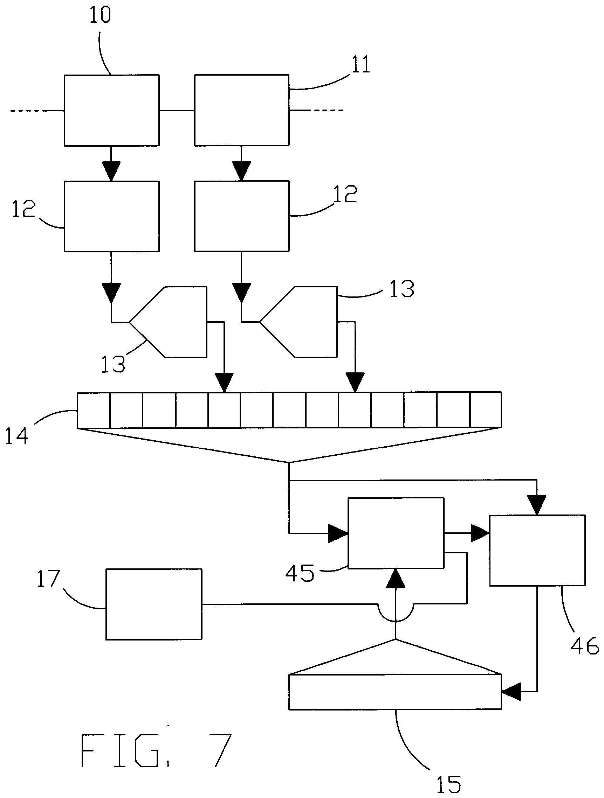

**Figure 7** shows a variant of the control unit 7 that differs from the unit shown in figure 2 in the fact that the memory 15, rather than being adapted to store a plurality of predefined rules, is adapted to store a plurality of synaptic weights and/or transfer functions of a plurality of calculating units of a numerical classifier 45 included in the control unit in lieu of the expert system 16 and connected to the memory 14. The classifier 45 is adapted to receive as input one or more values stored in the memory 14, and to emit a decision to disconnect the electrical wiring system 3 from the distribution network 2 as a function of the values received as input. In other words, the values stored in the memory 14 correspond to values that can be entered as input into the classifier 45, and the synaptic weights and/or transfer functions storable in the memory 15 correspond to the synaptic weights and/or transfer functions of the calculating units of the classifier 45. The latter, similarly to the expert system 16, therefore serves as means of processing the values stored in the memory 14, and is adapted to emit a decision to disconnect the electrical wiring system 3 from the distribution network 2 as a function of the values stored in the memory 14. The classifier 45 is preferably a neural network, and even more preferably a neural network of the "multi-layer perceptron" type.

According to this variant of the control unit 7, the processor 17 is adapted to impart to actuator 6 a command to open the switch 5 whenever the classifier 45 emits a decision to disconnect the electrical wiring system 3 from the distribution network 2. The control unit furthermore includes a training system 46 supervising the classifier 45. The training system 46 is connected to both memories 14 and 15 and is adapted both to store synaptic weights and/or transfer functions in the memory 15, and to modify synaptic weights and/or transfer functions possibly already present in the same.

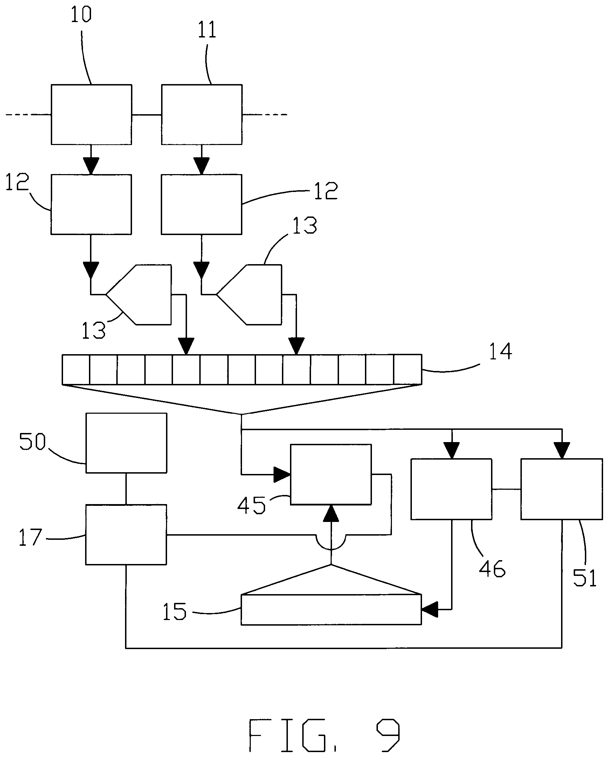

Incidentally, according to this variant, the control unit preferably includes a sub-processor 51 (shown in figure 9) for calculating the output of the classifier 45, for storing the synaptic weights and/or the transfer functions in the memory 15 and for modifying (in particular, for updating, as better illustrated further down in the present description) the synaptic weights and/or transfer functions possibly already stored in the memory 15. The sub-processor 51 is preferably an integrated circuit, and even more preferably is included in the training system 46. A sub-processor 51 can also be simulated in software (digitally) by the processor 17.

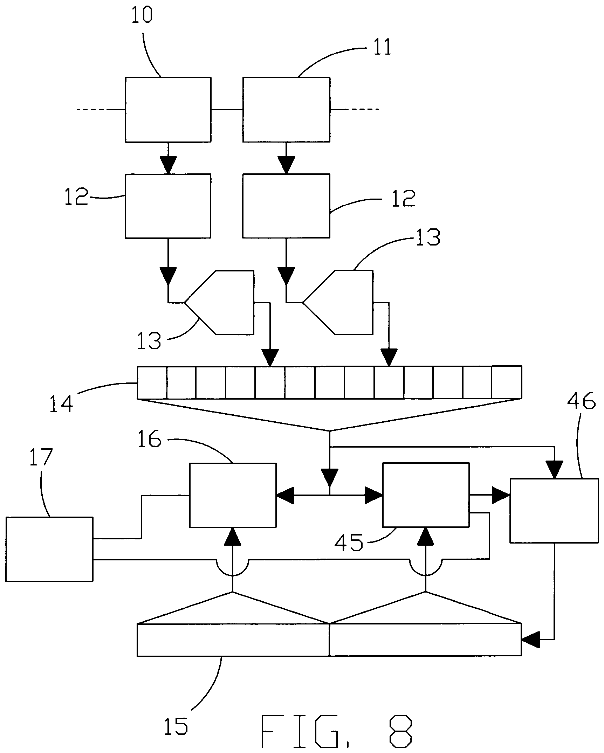

**Figure 8** shows a variant of the control unit 7 which differs from the unit shown in figure 2 in the fact that it also includes the classifier 45 and the training system 46. According to this variant, the memory 15 is therefore adapted to store both a plurality of predefined rules of the expert system 16, and a plurality of synaptic weights and/or transfer functions of a plurality of calculating units of the classifier 45. The processor 17 is therefore adapted to impart to actuator 6 a command to open the switch 5 whenever the expert system 16 and/or the classifier 45 emit a decision to disconnect the electrical wiring system 3 from the distribution network 2.

The variant of the control unit 7 which comprises the expert system 16 but not the numerical classifier 45, and the variant of the control unit 7 which comprises the numerical classifier 45 but not the expert system 16 are not part of the present invention.

**Figure 9** shows a variant of the control unit 7 which differs from the unit shown in figure 7 in the fact that it also includes a command 50 by means of which a user of the device which is the subject of the invention may revoke a disconnection decision emitted by the classifier 45, in such manner that it prevents the processor 17 from commanding the opening of the switch 5. In addition to that, by means of the sub-processor 51, the user of the device which is the subject of the invention may command the training system 46 in such manner that it modifies at least partially the synaptic weights and/or transfer functions stored in the memory 15 on the basis of the values stored in the memory 14. Thanks to the sub-processor 51, the user of the device which is the subject of the invention, whenever they revoke the disconnection decision emitted by the classifier 45, may therefore impart the command that the synaptic weights and/or transfer functions stored in the memory 15 are modified (that is, updated) for example in such manner that a potential repeat of the event that led to the emission of a disconnection decision would not lead again to emitting a disconnection decision. The user may also decide to revoke a disconnection decision without imparting the command to modify the synaptic weights and/or the transfer functions. The usefulness of the updatability of the synaptic weights and the transfer functions at the discretion of a user of the device which is the subject of the invention is exemplified by the following hypothetical scenario. Let us consider the situation wherein an alarm is generated following the connection to the electrical wiring system 3 of a new appliance 4 whose "profile" differs substantially from those previously "learnt". The classifier 45 considers the installation of the new appliance an anomaly and, consequently, emits a decision to disconnect the electrical wiring system 3 from the distribution network 2. While revoking the disconnection decision, the user may decide whether to update or not the synaptic weights and/or the transfer functions stored in the memory 15. If the installation of such appliance is permanent (for example, following the purchase of a new household appliance), it is preferable that the synaptic weights and/or transfer functions are updated to avoid further false alarms from the classifier 45. If, on the contrary, the connection of said appliance is provisional (for example caused by the realization of building works requiring high-power electrical machines, such as drills and the alike), then it is preferable that the synaptic weights and/or transfer functions are not updated, to avoid the risk of reducing the sensitivity of the device which is the subject of the invention with respect to anomalous situations.

For example, the command 50 includes two pushbuttons (not shown in the figures): a first pushbutton by means of which it is possible to revoke a disconnection decision emitted by the classifier 45 and a second pushbuttons by means of which, in addition to revoking the disconnection decision, it is possible to update the synaptic weights and/or the transfer functions stored in the memory 15. According to a variant of the control unit 7, the command 50 furthermore includes a modality for disabling the classifier 45 (which can be enabled, preferably, by means of a third button not shown in figure) which allows inhibiting the ability of the processor 17 to carry out disconnection decisions in response to signals of this kind originating from the classifier 45. The aforementioned disabling mode is useful, for example, in the aforementioned scenario, to avoid the repetition of false alarms in the case of temporary connection of appliances such as in the case of realization of building works. It is also possible to provide means of enabling such modality with a predetermined duration (for example, 12 or 24 hours).

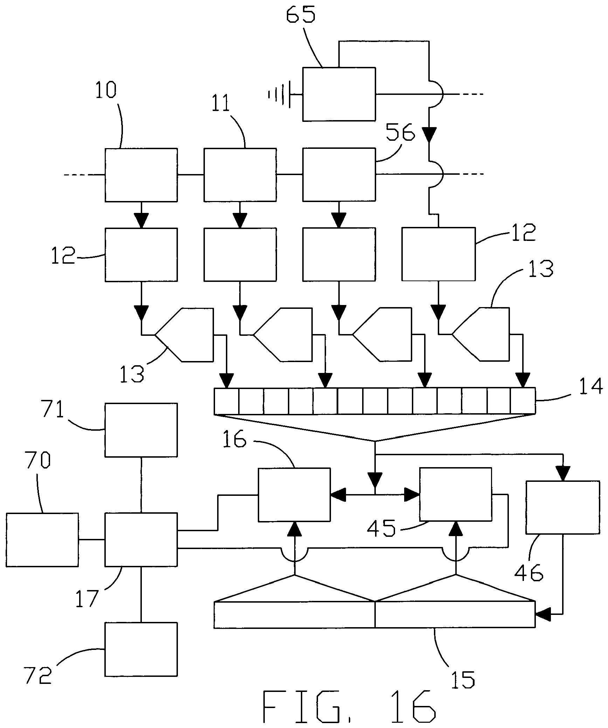

Preferably, the control unit shown in figure 9 includes a system 71 (shown in figure 16) adapted to emit an alarm signal each time the processor 17 imparts to the actuator 6 a command to open the switch 5 (that is, each time the processor 17 commands the disconnection of the electrical wiring system 3 from the distribution network 2). As will be illustrated in greater detail further down in the present description, whenever the classifier 45 emits a disconnection decision, the processor 17 commands the actuator 6 to open the switch 5 after a predetermined time interval, and the system 71 warns the user of the device which is the subject of the invention about the imminent disconnection. The user, having been made aware of the imminent disconnection, may decide to intervene by revoking the disconnection and possibly updating the synaptic weights and/or transfer functions stored in the memory 15.

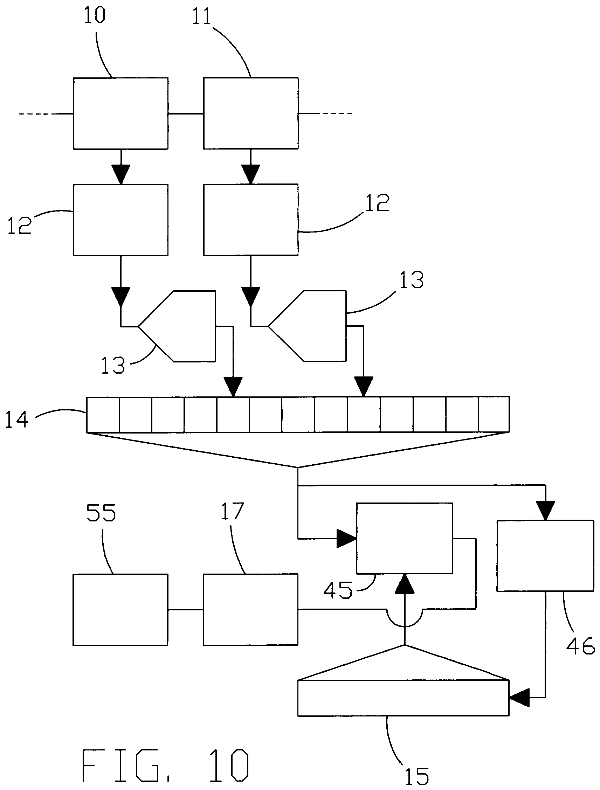

**Figure 10** shows a variant of the control unit 7 which differs from the unit shown in figure 7 in the fact that it also includes a clock-calendar 55. According to this variant of the unit 7, the classifier 45 is adapted to process values stored in the memory 14 on the basis of one or more synaptic weights and/or transfer functions stored in the memory 15 as a function of a time and/or date as measured by the clock-calendar 55 or as function of a time interval as measured by the clock-calendar 55. The training system 46 is adapted to store one or more synaptic weights and/or transfer functions in the memory 15 linking them to a time and/or date as measured by the clock-calendar 55 or linking them to a time interval as measured by the clock-calendar 55. The training system 46 is furthermore adapted to modify one or more synaptic weights and/or transfer functions stored in the memory 15 as a function of a time and/or date as measured by the clock-calendar 55 or as a function of a time interval as measured by the clock-calendar 55, or linking them to a time and/or date as measured by the clock-calendar 55 or as to a time interval as measured by the clock-calendar 55.

According to a variant of the control unit 7, the control unit includes the expert system 16, the classifier 45, the training system 46, the command 50, the sub-processor 51 and preferably also the clock-calendar 55. Similarly to what was stated with reference to the control unit shown in figure 8, according to this variant of the control unit 7 the memory 15 is adapted to store both a plurality of predefined rules of the expert system 16 and a plurality of synaptic weights and/or transfer functions of a plurality of calculating units of the classifier 45. The processor 17 is therefore adapted to impart to actuator 6 a command to open the switch 5 whenever the expert system 16 and/or the classifier 45 emit a decision to disconnect the electrical wiring system 3 from the distribution network 2.

According to this variant of the control unit 7, one or more times and/or dates and/or time intervals as measurable by the clock-calendar 55 are also preferably stored in the memory 14, and the expert system 16 is preferably adapted to apply the rules stored in the memory 15 corresponding to one or more times and/or dates and/or time intervals stored in the memory 14.

In particular, the expert system 16 is preferably capable of determining the trueness of facts also as a function of a time and/or date as measured by clock-calendar 55 or as a function of a time interval as measured by the clock-calendar 55.

Similar considerations hold for the case, not part of the present invention, wherein the control unit includes the expert system 16 and the clock-calendar 55, but not the classifier 45.

As previously indicated, the presence of the clock-calendar 55 makes it possible to identify anomalous situations that stem from the operation of certain appliances corresponding to unusual times or days, or stemming from the connection of said appliances lasting longer than a given time interval. One should consider, for example, the possibility that in a residential context, a clothes iron or an electric oven are forgotten switched on for a high number of hours, or that the same are forgotten switched on beyond the usual time slot corresponding to which usually the domestic activity is reduced.

For example, the expert system 16, the classifier 45, the training system 46 and the sub-processor 51 are implemented in a coprocessor which speeds up the operations of classification and learning. The coprocessor is controlled by the processor 17 and may include, for example, an ASIC (Application Specific Integrated Circuit) dedicated integrated circuit and/or an FPGA (Field Programmable Gate Array) programmable logic device and/or a DSP Digital Signal Processor.

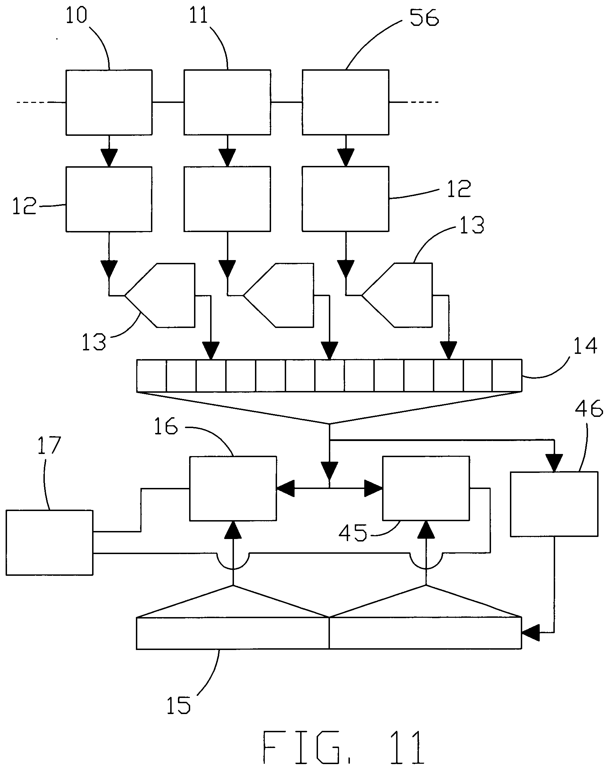

**Figure 11** shows a variant of the control unit 7 which differs from the unit shown in figure 8 in the fact that it also includes a fourth stage 56 for measuring the total electrical dispersion current, connected between all active conductors of the distribution network 2 (for example, in figure 11, by means of stages 10 and 11) and the electrical wiring system 3. The control unit shown in figure 11 furthermore includes one of the conditioning stages 12 connected in cascade to measurement stage 56 (and consequently, at least to one of the analog-digital converters 13 connected in cascade to the conditioning stage 12).

As previously indicated, the total electrical dispersion current corresponds to the sum of the currents over all active conductors of the electrical wiring system (therefore excluding the ground conductor), and represents the magnitude measured by the residual current devices usually installed in residential contexts. Under ideal conditions, the total electrical dispersion current is zero. Incidentally, similarly to the measurement stages 10 and 11, also the measurement stage 56 measures a signal that can be stored in the memory 14 by means of one of the conditioning stages 12.

The measurement stage 56 may also be present in the control unit 7 shown in figure 2 and in any other variant of the control unit 7 cited above.

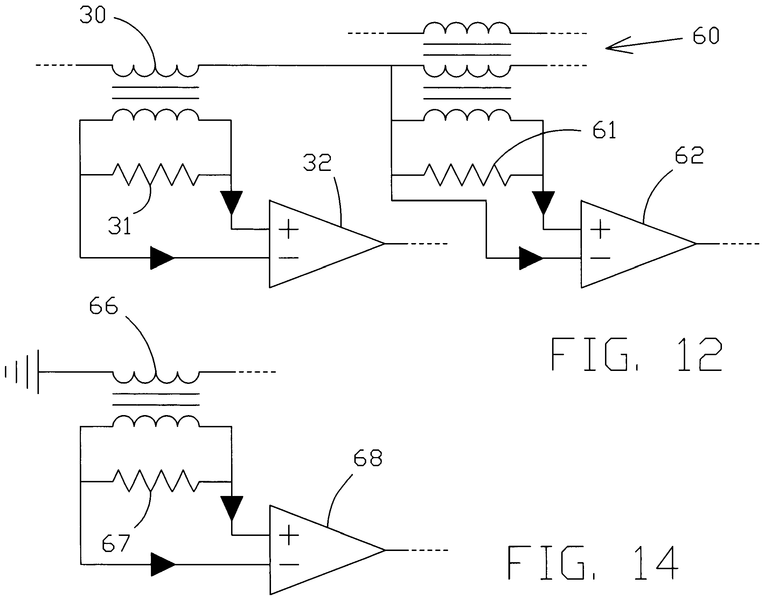

With reference to **figure 12****,** the measurement stage 56 includes:
- a second transformer 60 (also referred to as "differential") for measuring the dispersion electric current, connected in series between the transformers 30 and the electrical wiring system 3, and coupled to a second load resistor 61;
- a fifth amplifier 62 connected to both sides of the resistor 61 for measuring a voltage difference between the same.

Incidentally, the transformer 60 is preferably of the type commonly used for driving the residual current devices, of single-phase or three-phase type depending on the electrical wiring system where installed, and the total electrical dispersion current transduced by the same is, under normal conditions, extremely much smaller with respect to the currents present in the individual conductors (transduced by the transformers 30). The transformer 60, the resistor 61 and the amplifier 62 are therefore sized differently. By definition, in fact, the total electrical dispersion current, allowing for measurement tolerances, is always equal to or greater than the dispersion current flowing through the ground conductor (measured, as specified subsequently, by the transformer 66). Similarly to what was stated for the amplifiers 23, 24, 25 and 32, the amplifier 62 is preferably equipped with suitable circuits to reduce or amplify the voltage. The control unit shown in figure 11 includes one of the conditioning stages 12 connected in cascade to the amplifier 62 (and consequently at least one of the analog-digital converters 13 connected in cascade to the conditioning stage 12). According to this variant of the control unit 7, the conditioning stages 12 (and the analog-digital converters 13 respectively connected in cascade to the same) are therefore present also for the current measured by the stage 56.

Incidentally, all above-indicated variants of the conditioning stages 12 are valid, both those shown in the figures 4, 5 and 6 and those not shown in the figures. One of the variable gain amplifiers 35 is therefore preferably connected in cascade to the differential amplifier 62 (to bring back the voltage to a range suitable for maximising the sensitivity of the device which is the subject of the invention without incurring saturation).

According to a variant of the measurement stage 56, the measurement stage for the total electrical dispersion current is devoid of the transformer 60. In that case, the resistor 61 and the amplifier 62 are connected to a similar transformer located externally to the device 1, and possibly included in the electrical safety devices 8 (for example within a residual current device).

According to another variant of the measurement stage 56, the measurement stage for the total electrical dispersion current is devoid of the transformer 60 (and of the amplifier 62) and, in lieu of said transformer 60, includes sections of conductors in the proximity of which a magnetic field sensor is installed, preferably a Hall effect sensor.

Incidentally, the device which is the subject of the invention could be devoid of the measurement stage 56 but nevertheless be capable of measuring the total electrical dispersion current, in a known manner, starting from the measurement of the currents in the individual conductors, by means of a suitable calculation or by means of a suitable measurement circuit located downstream of the amplifiers 32.

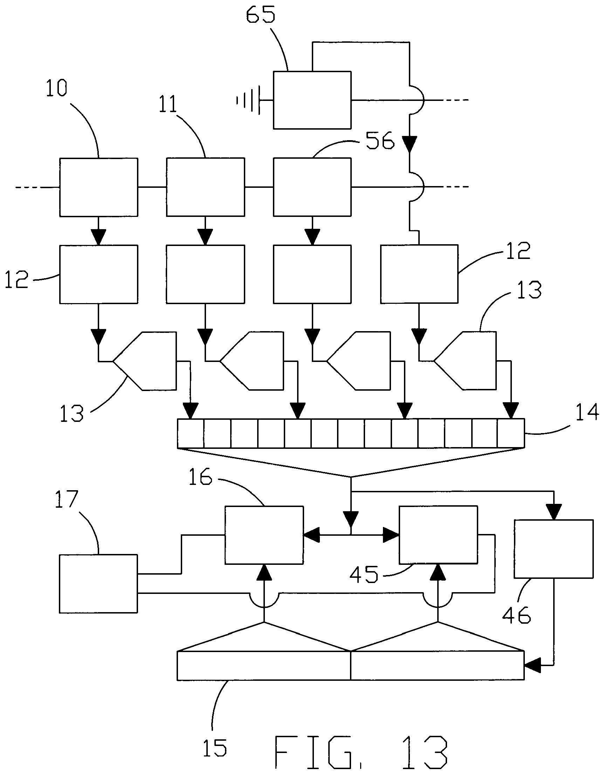

**Figure 13** shows a variant of the control unit 7 which differs from the unit shown in figure 11 in the fact that it includes also a fifth stage 65 for measuring the total electrical dispersion current passing through the ground conductor, connected between the ground conductor of the distribution network 2 (in electrical wiring systems of the TN type) and the ground conductor of the electrical wiring system 3. The control unit 7 furthermore includes one of the conditioning stages 12 connected in cascade to the measurement stage 65 (and consequently at least one of the analog-digital converters 13 connected in cascade to the conditioning stage 12).

Incidentally, in electrical wiring systems of the TT or IT type, the measurement stage 65 instead of being connected between the ground conductors of the distribution network 2 and of the electrical wiring system 3, is connected between the ground electrode or ground electrodes installed locally and the ground conductor of the electrical wiring system 3.

Incidentally, similarly to the measurement stages 10 and 11, also the measurement stage 65 measures a signal which can be stored in the memory 14 by means of one of the conditioning stages 12.

The measurement stage 65 may also be present in the control unit 7 shown in figure 2 and in any other aforementioned variant of the control unit 7.

With reference to **figure 14****,** the measurement stage 65 includes:
- a third transformer 66 for measuring the electrical dispersion current passing through the ground conductor, connected between the ground conductor of the distribution network 2 (or the ground electrode or ground rods) and the ground conductor of the electrical wiring system 3, and coupled to a third load resistor 67;
- a sixth amplifier 68 connected to both sides of the resistor 67 for measuring a voltage difference between the same.

Similarly to what was stated for the amplifiers 23, 24, 25, 32 and 62, the amplifier 68 is possibly provided with suitable circuits for reducing the voltage. Incidentally, as for the transformer 60 and the amplifier 62, also in this case, under normal conditions, the current is extremely much smaller with respect to the currents present in the active conductors (transduced by the transformers 30). The transformer 66, the resistor 67 and the amplifier 68 are therefore sized differently.

The control unit shown in figure 13 includes one of the conditioning stages 12 connected in cascade to the amplifier 65 (and consequently at least one of the analog-digital converters 13 connected in cascade to the conditioning stage 12). According to this variant of the control unit 7, the conditioning stages 12 (and the analog-digital converters 13 respectively connected in cascade to the same) are therefore present also for the current measured by the stage 65. Incidentally, all the aforementioned variants of the conditioning stages 12 are valid, including both those shown in the figures 4, 5 and 6 and those not shown in the figures. One of the variable gain amplifiers 35 is therefore preferably connected in cascade to the differential amplifier 68 (to bring back the voltage to a range suitable for maximising the sensitivity of the device which is the subject of the invention without incurring saturation).

According to a variant of the measurement stage 65 not shown in the figures, the measurement stage for the dispersion electric current passing through the ground conductor is devoid of the transformer 66. According to this variant, it is the resistor 67 that is directly connected between the ground conductor of the distribution network 2 (or the ground electrode or ground electrodes) and the ground contact of the electrical wiring system 3. The amplifier 68 may be provided with suitable means of galvanic isolation.

According to another variant of the measurement stage 65 not shown in the figures, the measurement stage for the dispersion electric current passing through the ground conductor is devoid of the transformer 66. The resistor 67 and the amplifier 68 are connected to a similar transformer located externally to the device 1, and possibly included in the electrical safety devices 8 (for example, in the form of a solenoid applied externally corresponding to the equipotential junction (node)).

According to another variant of the measurement stage 65 not shown in the figures, the measurement stage for the dispersion electric current is devoid of the transformer 66 (and of the amplifier 68), and in lieu of said transformer 66, includes a section of the ground conductor of the electrical wiring system 3 in the proximity of which a magnetic field sensor has been installed, preferentially a Hall effect sensor.

Incidentally, the measurement stage 65, from a circuit viewpoint, is equivalent to one of the current measurement stages 11. However, being the current passing through the ground conductor under normal conditions extremely much smaller with respect to the currents passing through the phase and neutral conductors (transduced by the transformers 30), that is on the order of a factor of 1,000 times smaller, the transformer 66, the resistor 67 and the amplifier 68 are sized differently in order to allow an optimal measurement of the aforementioned current.

According to a variant of the device 1 not shown in the figures, the electrical safety device which is the subject of the invention includes a dedicated ground electrode, and the control unit includes a sixth stage for measuring an electrical voltage between the aforementioned ground electrode and the ground conductor of the electrical wiring system.

The control unit furthermore includes one of the conditioning stages 12 connected in cascade to the aforementioned sixth measurement stage (and consequently at least one of the analog-digital converters 13 connected in cascade to the conditioning stage 12).

Incidentally, similarly to the measurement stages 10 and 11, also the sixth measurement stage records a signal that can be stored in the memory 14 by means of one of the conditioning stages 12.

The sixth measurement stage (and, with it, the dedicated ground electrode) may also be present in the control unit 7 shown in figure 2 and in any other aforementioned variant of the control unit 7.

The possibility of measuring the voltage difference between the ground conductor of the electrical wiring system and the absolute ground offers further advantages in terms of rapid detection of malfunctions of the ground system (such as, for example, an anomalous increase of impedance or potential), particularly with reference to electrical wiring systems of the TN and IT types. Incidentally, for the aforementioned dedicated ground electrode, it is not necessary to have low contact impedance, since the same is exclusively used for measurement purposes.

The sixth measurement stage includes, preferentially, a seventh amplifier connected to the aforementioned ground electrode and to the ground conductor of the electrical wiring system for measuring the voltage difference between the same.

Similarly to what was stated for the amplifiers 23, 24, 25, 32 and 62, the seventh amplifier is preferentially provided with suitable circuits for reducing or amplifying the voltage. According to this variant, the control unit includes one of the conditioning stages 12 connected in cascade to the seventh amplifier (and consequently at least one of the analog-digital converters 13 connected in cascade to the conditioning stage 12). The conditioning stages 12 (and the analog-digital converters 13 respectively connected in cascade to the same) are therefore instanced also for the voltage measured by the sixth stage.

Incidentally, all the aforementioned variants of the conditioning stages 12 are valid, both those shown in the figures 4, 5 and 6, and those not shown in the figures. One of the variable gain amplifiers 35 is therefore preferentially connected in cascade to the seventh amplifier to bring back the voltage to a range suitable for maximising the sensitivity of the device which is the subject of the invention without incurring saturation.

According to a variant of the electrical safety device which is the subject of the invention, the control unit 7 furthermore includes an additional training system (not shown in the figures) supervising the expert system 16. Said additional training system is connected to the memories 14 and 15, and is adapted to modify the thresholds of the expert system 16 (included in the rules stored in the memory 15).

According to the present variant, the control unit 7 furthermore includes a command by means of which, after the expert system 16 has emitted a disconnection decision, a user of the device which is the subject of the invention may command said further training system in such manner that it modifies (that is, updates), at least partially, the thresholds of the expert system 16 (included in the rules stored in the memory 15) in such way that a potential repeat of the event that has led to the disconnection decision would not lead again to a disconnection decision.

Incidentally, differently from the command 50 of the training system 46, the aforementioned command of the further training system cannot prevent the disconnection of the electrical wiring system 3 from the distribution network 2. The instruction of updating the thresholds is always subsequent to the material execution of the disconnection, and preferentially can be imparted by the user of the device which is the subject of the invention while rearming the switch.

If the clock-calendar 55 is present, said further training system is adapted to modify the aforementioned thresholds as a function of a time and/or date as measured by the clock-calendar 55 or as function of time interval as measured by the clock-calendar 55.

Incidentally, said further training system may be present in the control unit 7 shown in figure 2 and in any other aforementioned variant of the control unit 7. According to the present variant, the expert system 16, similarly to the numerical classifier 45, is of adaptive type.

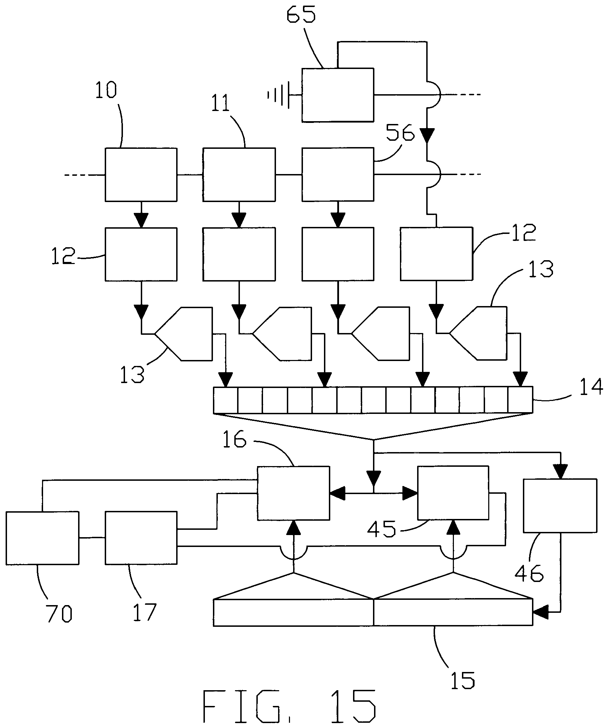

**Figure 15** shows a variant of the control unit 7 which differs from the unit shown in figure 11 in the fact that it also includes one or more sensors 70 for detecting, in the proximity of the location where the device which is the subject of the invention is installed, situations of danger not strictly of electrical nature but such as to render appropriate either the disconnection of the electrical wiring system 3 from the distribution network 2, or the limiting of the electric current passing through the same.

More precisely, the variant of the control unit 7 illustrated here includes preferably the following sensors 70:
- a sensor for detecting seismic activity in the location where the device which is the subject of the invention is installed. This sensor includes, preferably, one or more accelerometers and/or solid-state gyroscopes;
   and/or
- a sensor for detecting the presence of smoke (preferably of the photoelectric or ionisation type) and/or flammable gas (preferably of the semiconductor type) in the location where the device which is the subject of the invention is installed;
   and/or
- a sensor for detecting flooding in the location where the device which is the subject of the invention is installed. This device preferably includes, preferably, a resistive/capacitive sensor located on the floor or an ultrasonic sensor directed towards the floor in such a manner as to measure possible changes in distance indicative of an accumulation of water.

The sensors 70 are largely known. We shall therefore not dwell on providing further details.

The sensors 70 are connected to the processor 17 and the latter is adapted to impart to actuator 6 a command to open the switch 5 whenever the sensors 70 detect one of the aforementioned situations of danger, that is whenever a seismic activity greater than a predetermined threshold is detected or whenever a concentration of smoke or gas greater than a predetermined threshold is detected or whenever a flooding is detected.

In circumstances which can be defined by means of appropriate rules of the expert system 16 stored in the memory 15, certain situations of danger may lead not to a disconnection of the electrical wiring system 3 from the distribution network 2, but to a reduction of the available power, above which the disconnection is carried out. For example, while the presence of combustible gas represents an insurmountable danger which can be contrasted only by means of disconnecting the electrical wiring system, the presence of seismic activity or smoke may not be an immediate source of damage to the electrical wiring system. On the contrary, the normal functioning of the lighting devices may be of help to evacuation and rescue operations. The rules of the expert system 16 may therefore be configured in such manner as to reduce the maximum power threshold in the presence of said events, so as to maximise the sensitivity to potential situations of danger caused by damage to the electrical wiring system 3 and the appliances of the same 4, however without assuming a priori the presence of such situations.

Incidentally, the sensors 70 may also be present within the control unit 7 shown in figure 2 and in any other aforementioned variant of the control unit 7. The sensors 70 may furthermore be connected to the control unit 7 by means of wire connections (for example, by means of appropriate digital or analog inputs, or by means of "bus"-type connections, preferably according to the standards RS-232, RS-485 and Ethernet), or by means of electromagnetic waves, in particular by including in the control unit 7 an appropriate receiver preferably tuned to the frequencies of 433 MHz and/or 866 MHz commonly used for "wireless" sensors of this kind (that is, without wires).

**Figure 16** shows a variant of the control unit 7 which differs from the unit shown in figure 15 in the fact that it also includes the system 71 adapted to emit an alarm signal whenever the processor 17 imparts to the actuator 6 a command to open the switch 5. The emission system 71 includes, preferably, one or more emitters of an optical and/or audible alarm signal (preferably a siren or a vocal message playback device) adapted to locally warn a user of the device which is the matter of the invention of a disconnection that has been carried out or is imminent (as shall be illustrated further down in the present description) of the electrical wiring system 3 from the distribution network 2. In case a disconnection decision emitted by the classifier 45 can be revoked by the user of the device which is the subject of the invention (by means of the sub-processor 51), revoking the disconnection decision also disables the emission of the alarm signal.

The control unit shown in figure 16 further includes a system 72 for receiving and transmitting radio frequency electromagnetic waves. The system 72 is preferably adapted to:
- transmit waves encoding an alarm signal whenever the processor 17 imparts or is about to impart to the actuator 6 a command to open the switch 5;
   and/or
- transmit waves encoding information related to the values stored in the memory 14 and/or 15, and/or disconnection decisions possibly emitted by the expert system 16 or by the classifier 45. Preferably, said waves can be transmitted to a monitoring station consisting of a computer or a mobile phone, preferably according to the standard IEEE 802.11 (also known as "WLAN" or "WiFi") or the standard IEEE 802.15 (also known as "Bluetooth");
   and/or
- receive waves encoding alarm signals originating from other apparatuses external to the device which is the subject of the invention, such as domotics and/or automation systems;
   and/or
- receive waves encoding, with appropriate encryption, requests to disconnect coming from the electrical distribution network 2, for example in response to a situation of network overload.

The system 72 is therefore adapted to warn a user of the device which is the subject of the invention who is not located in the immediate vicinity of the same (that is, for example, not reachable by means of the aforementioned optical and/or audible alarm signal) of a disconnection of the electrical wiring system 3 from the distribution network 2 that has been carried out or is imminent. In addition to this, the system 72 is adapted to transmit to the aforementioned user information about the state (present or historical) of the electrical wiring system 3, in order to allow a remote detection of the parameters of the same. The system 72 is finally adapted to receive alarm signals originating from other devices possibly present in the location where the device which is the subject of the invention is installed, so as to allow the processor 17 to warn the user of the device (by means of the systems 71 and/or 72) of the emission of the said further alarm signals.

The system 72 is furthermore adapted to notify the user of the device which is the subject of the invention of the total power drawn by the wiring system 3 and of its corresponding time course. Advantageously, this allows, for example, the user to implement an improved distribution of the domestic loads with respect to time slots associated to different billing profiles.

By means of the system 72, the device which is the subject of the invention is preferably capable of interacting with other devices that may be present in proximity of the location where the same is installed, such as domotics systems, devices measuring the consumption of electrical energy by the electrical wiring system 3 (that is, so-called "power meters") and the electrical distribution network itself 2, so as to allow a pervasive monitoring of the quality of the electrical supply and of the transmission efficiency.

By means of the system 72, the device which is the subject of the invention may furthermore enable the devices making up the electrical distribution network 2 to carry out a disconnection, provisional or permanent, of the electrical wiring system 3 from the same. As is known, network overloads tend to be rapidly-evolving transient events and have short duration. The device which is the subject of the invention enables responding to them, allowing a flexible and pervasive "modulation" of the load, further enabling assigning a priority to the disconnection decisions based on the instantaneous absorbed power. This feature is particularly advantageous for responding to situations under which an overload of the low or medium voltage network may arise, following which it is necessary to rapidly reduce the load so as to avoid a propagation of the overload with consequent intervention of network-level protection devices and consequent "power outage".

Incidentally, the device which is the subject of the invention is capable of carrying out a temporary disconnection whenever provided with a motorised actuator or a relay switch instead of a release coil, or in any case of an actuator 6 capable of moving the switch 5 in both directions, in that, contrary to what is generally provisioned for the switches controlled by the existing microprocessor-based "power meters", in that case the switch 5 does not need to be rearmed manually.

The transmission of the aforementioned electromagnetic waves towards domotics and/or automation systems, and/or towards devices including the electrical distribution network 2 may take place via the ether, preferably in narrowband mode (even more preferably, complying with prevalent standards in the field of the "Internet of Things (IoT)" such as GSM® and its derivatives, LoRa® and Weightless®), by means of one or more antennas, or by means of the same conductors of the electrical wiring system 3, preferably by means of a "power line modem" frequently used for remote reading and control of microprocessor-based power meters, preferably as defined by the specification CENELEC-EN 50065-1.

Incidentally, the systems 71 and/or 72 may also be present in the control unit 7 shown in figure 2 and in any other aforementioned variant of the control unit 7.

According to a variant of the control unit 7, the control unit is adapted to transmit and receive the aforementioned signals also by means of wired connections, preferably by means of suitable analog or digital inputs, or digital connections of the "bus" type, preferably according to the standards RS-232, RS-485 and Ethernet.

According to another variant of the control unit 7, the control unit includes a third memory, not shown in the figures, wherein the values stored in the memory 14 can be stored alongside the disconnection decisions emitted by the expert system 16 or by the classifier 45. Said third memory serves as a registry of the events for the device which is the subject of the invention and can preferably be consulted by means of a suitable interface towards an external computer (preferably via "Universal Serial Bus", or "USB") or by means of a local wired or wireless network. As an alternative, the third memory may be removable, preferably by means of a "Secure Digital" or "SD" card.

Incidentally, the aforementioned third memory may be present in the control unit 7 shown in figure 2 or in any other aforementioned variant of the control unit 7.

According to another variant of the control unit 7 not shown in the figures, the control unit includes, for each conductor of the distribution network 2, a further passive protection stage, located upstream of the measurement stages 10 and 11, and adapted to absorb transient and overvoltage events originating from the distribution network 2 which could damage both the electrical appliances of the electrical wiring system 3 (increasing the risk of malfunctions which may cause situations of danger), and the other components of the device which is the subject of the invention. The passive protection stage includes, preferably, gas-discharge tubes (GDTs) and/or varistors (MOVs) and/or transient-suppression diodes (TVS) connected between the ground conductor and the other conductors of the distribution network 2, possibly through fuses. The gas-discharge tubes, the varistors and the transient-suppression diodes, in case of transient overvoltage originating from the distribution network 2, realize a reversible short circuit so as to dissipate the excess voltage. Whenever a certain threshold of intensity and/or duration of the overvoltage is exceeded, the gas discharge tubes, the varistors and the diodes become ineffective, effectively transforming themselves into an open circuit, spontaneously or as a consequence of the formation of an irreversible short circuit in the same, leading to opening of the fuses located upstream of the same. Being the processor 17 connected to the passive protection stage, the latter is capable of signalling to the processor 17 whether it is still intact or not.

Incidentally, the further passive protection stage described above may be present in the control unit 7 shown in figure 2 or in any other aforementioned variant of the control unit 7.

Being the electrical safety device 1 and the possible variants of the same now known, its functioning will be illustrated below.

As previously mentioned, each of the electrical appliances 4 present in the electrical wiring system 3 possesses a characteristic profile of electrical behaviour. The device 1, by means of the measurement stages 10 and 11, and possibly also stages 56 and/or 65, is capable of defining, at each time point, a scenario of the electrical wiring system based on the aforementioned profile of behaviour of each load of the electrical wiring system and of the overlap of the same. The scenario of the electrical wiring system is defined by the values that can be stored by the stages 10, 11, 56 and 65 in the memory 14. The latter therefore contains a set of values which represent the state of the electrical wiring system 3 at a given time point (or in a given time interval).

The expert system 16 and the classifier 45 enable the device 1 to monitor, by means of the values stored in the memory 14, the electrical wiring system 3 and to establish, predicated on the rules of the expert system 16 and on the synaptic weights and transfer functions of the classifier 45 stored in the memory 15, whether a situation of danger or an atypical situation exists, such that it is appropriate to open the switch 5 so to disconnect the electrical wiring system 3 from the distribution network 2. More precisely, the expert system 16 is responsible for recognising situations having a high probability of corresponding to a situation of danger, which require an immediate disconnection of the supply of electric current to the wiring system 3, without requesting the consent of a user of the device 1. The classifier 45 instead is responsible for performing an adaptive recognition of anomalous situations upon the occurrence of which the device 1 sends an alarm signal to the user. If the latter does not provide a confirmation of the electrical safety, the device 1 interrupts the supply of electric current to the wiring system 3 after a predetermined time interval. In the preferred form of realisation of the device which is the subject of the invention, the disconnections of the electrical wiring system 3 from the distribution network 2 commanded by the classifier 45 are therefore not immediate, as those commanded by the expert system 16, but instead delayed.

In greater detail, the expert system 16 constantly applies the rules stored in the memory 15 to the values stored in the memory 14 and emits a decision to disconnect the electrical wiring system 3 from the distribution network 2 whenever it identifies a situation of danger predicated on the same, by means of determining the trueness of one or more facts through the aforementioned thresholds (of the system 16 and included in the rules stored in the memory 15) and therefore processing the aforementioned facts by means of the inference engine with the purpose of coming to a disconnection decision.

Whenever the expert system 16 emits a disconnection decision, the processor 17 commands to the actuator 6 to immediately open the switch 5. The rules of the expert system 16 are preferably predefined and are associated to situations of high probability of danger, for example:
1. If the absorption of electric current by the electrical wiring system 3 on one or more phases (in the case of three-phase wiring systems) is greater than a predetermined threshold, for example 16 A, then the fact EXCESSIVE_ABSORPTION is TRUE, otherwise the same is FALSE;
2. If the absorption of electric current by the electrical wiring system 3 on one or more phases (in the case of three-phase systems) is greater than a predetermined threshold, for example 10 A, then the fact HIGH_ABSORPTION is TRUE, otherwise the same is FALSE;
3. If the absorption of electric current by the electrical wiring system 3 on one or all phases (in the case of three-phase systems) is lower than a predetermined threshold, for example 1 A, then the fact LOW_ABSORPTION is TRUE, otherwise the same is FALSE;
4. If the fact HIGH_ABROSPTION is TRUE uninterruptedly for at least 12 hours, then the fact HIGH_ABROSPTION_PROTRACTED is TRUE, otherwise the same is FALSE;
5. If the total harmonic distortion on one or more phases (in the case of three-phase systems) is greater than a predetermined threshold, for example 5%, then the fact HIGH_DISTORTION is TRUE;
6. If the total harmonic distortion on one or more phases (in the case of three-phase systems) is greater than a predetermined threshold, such as 10%, then the fact EXCESSIVE_DISTORTION is TRUE;
7. If the voltage asymmetry on one or more phases (in the case of three-phase systems) is greater than a predetermined threshold, for example 5%, then the fact HIGH_ASYMMETRY is TRUE;
8. If the voltage asymmetry on one or more phases (in the case of three-phase systems) is greater than a predetermined threshold, such as 10%, then the fact EXCESSIVE_ASYMMETRY is TRUE;
9. If the root-mean-square voltage measured in the frequency band 250 Hz ― 200 KHz is greater than 10 V according to the measurement by means of the amplifier 24 with respect to the amplifier 23, then the fact HIGH_NOISE is TRUE;
10. If the root-mean-square voltage measured in the frequency band 250 Hz - 200 KHz is greater than 20 V according to the measurement by means of the amplifier 24 with respect to the amplifier 23, then the fact EXCESSIVE_NOISE is TRUE;
11. If the total electrical dispersion current is greater than a predetermined threshold, for example 20 mA, then the fact EXCESSIVE_TOTAL_DISPERSION is TRUE, otherwise the same is FALSE;
12. If the total electrical dispersion current is greater than a predetermined threshold, for example 10 mA, then the fact HIGH_TOTAL_DISPERSION is TRUE, otherwise the same is FALSE;
13. If the electrical dispersion current passing through the ground conductor is greater than a pre-established threshold, such as 10 mA, then the fact HIGH_DISPERSION_GROUND_CONDUCTOR is TRUE, otherwise the same is FALSE;
14. If the fact EXCESSIVE_ABSORPTION is TRUE, and/or the fact HIGH_ABSORPTION_PROTRACTED is TRUE, then the fact ANOMALOUS_ABSORPTION is TRUE, otherwise the same is FALSE;
15. If the fact EXCESSIVE_TOTAL_DISPERSION is TRUE, and/or the fact HIGH_TOTAL_DISPERSION is TRUE and the fact HIGH_DISPERSION_GROUND_CONDUCTOR is FALSE and the fact HIGH_ABSORPTION is FALSE, and/or if the fact HIGH_TOTAL_DISPERSION is TRUE and the fact LOW_ABSORPTION is TRUE, then the fact ANOMALOUS_DISPERSION is TRUE, otherwise the same is FALSE;
16. If the fact EXCESSIVE_DISTORTION is TRUE, and/or if the fact EXCESSIVE_ASYMMETRY is TRUE, and/or if the fact EXCESSIVE_NOISE is TRUE, and/or at least three among the facts HIGH_DISTORTION, HIGH_ASYMMETRY, HIGH_NOISE and HIGH_TOTAL_DISPERSION are TRUE, then the fact COMPLEX_ANOMALY is TRUE, otherwise the same is FALSE;
17. If the fact ANOMALOUS_ABSORPTION is TRUE, and/or the fact ANOMALOUS_DISPERSION is TRUE, and/or if the fact COMPLEX_ANOMALY is TRUE, then the fact DANGER_SITUATION is TRUE, otherwise the same is FALSE.

Upon occurrence of the trueness of the fact DANGER_SITUATION, the device 1 immediately interrupts the supply of electric current to the electrical wiring system 3 without consulting the user. Similarly, if the device 1 includes the sensors 70, the supply of electric current is immediately interrupted upon detecting a concentration of combustible gas exceeding a predetermined threshold. Similarly, depending on the configuration of the device, the supply of electric current is immediately interrupted (or, more restrictive limits of total current, dispersion current and ground current are activated) whenever seismic activity or concentration of smoke exceeding a predetermined threshold, or a flooding are detected. It appears evident that the functioning of the expert system 16 is not attributable to a mere application of thresholds, because the intermediate facts represent an essential step for representing in a more abstract, and therefore more effective manner, the state of the electrical wiring system. Incidentally, from the example described above, it appears evident that certain rules, such as the rules from 1 to 13, contain one or more thresholds which are applied to one or more parameters, whereas other rules, such as the rules from 14 to 17, have facts as their argument.

If the expert system 16 enables applying rules of the "fuzzy" type, then an even more refined monitoring becomes possible, which is able to consider in a weighted manner the "degree of trueness" of each assertion and consequently to avoid information loss due to the application of binary thresholds. For example, the aforementioned set of rules becomes:
1. Given the maximum electric current absorbed by the electrical wiring system 3 on all phases (in the case of three-phase systems), the fact EXCESSIVE_ABSORPTION has degree of trueness 0 if the same is lower than 10 A, degree of trueness 1 if the same is greater than 16 A, and degree of trueness linearly increasing in the range between said values;
2. Given the maximum absorption of electric current by the electrical wiring system 3 on all phases (in the case of three-phase systems), the fact HIGH_ABSORPTION has degree of trueness 0 if the same is lower than 5 A, degree of trueness 1 if the same is greater than 10 A, and degree of trueness linearly increasing in the range between said values;
3. Given the maximum electric current absorbed by the electrical wiring system 3 on all phases (in the case of three-phase systems), the fact LOW_ABSORPTION has degree of trueness 0 if the same is greater than 1 A, degree of trueness 1 if the same is lower than 0.1 A, and degree of trueness linearly increasing in the range between said values;
4. Given the fact HIGH_ABSORPTION, the degree of trueness of the fact HIGH_ABSORPTION_PROTRACTED is given by the average of the degree of trueness of the same calculated over the last 12 hours;
5. Given the maximum total harmonic distortion on one or more phases (in the case of three-phase systems), the fact HIGH_DISTORTION has degree of trueness 0 if the same is lower than 2%, degree of trueness 1 if the same is greater than 5%, and degree of trueness linearly increasing in the range between said values;
6. Given the maximum total harmonic distortion on one or more phases (in the case of three-phase systems), the fact EXCESSIVE_DISTORTION has degree of trueness 0 if the same is lower than 5%, degree of trueness 1 if the same is greater than 10%, and degree of trueness linearly increasing in the range between said values;
7. Given the maximum voltage asymmetry on one or more phases (in the case of three-phase systems), the fact HIGH_ASYMMETRY has degree of trueness 0 if the same is lower than 2%, degree of trueness 1 if the same is greater than 5%, and degree of trueness linearly increasing in the range between said values;
8. Given the maximum voltage asymmetry on one or more phases (in the case of three-phase systems), the fact EXCESSIVE_ASYMMETRY has degree of trueness 0 if the same is lower than 5%, degree of trueness 1 if the same is greater than 10%, and degree of trueness linearly increasing in the range between said values;
9. Given the difference in root-mean-square voltage measured in the frequency band 250 Hz - 200 KHz by means of the amplifier 24 with respect to the amplifier 23, the fact HIGH_NOISE has degree of trueness 0 if the same is lower than 5 V, degree of trueness 1 if the same is greater than 10 V, and degree of trueness linearly increasing in the range between said values;
10. Given the root-mean-square voltage difference measured in the frequency band 250 Hz - 200 KHz by means of the amplifier 24 with respect to the amplifier 23, the fact EXCESSIVE_NOISE has degree of trueness 0 if the same is lower than 10 V, degree of trueness 1 if the same is greater than 20 V, and degree of trueness linearly Increasing in the range between said values;
11. Given the total electrical dispersion current, the fact HIGH_TOTAL_DISPERSION has degree of trueness 0 if the same is lower than 5 mA, degree of trueness 1 if the same is greater than 10 mA, and degree of trueness linearly increasing in the range between said values;
12. Given the total electrical dispersion current, the fact EXCESSIVE_TOTAL_DISPERSION has degree of trueness 0 if the same is lower than 10 mA, degree of trueness 1 if the same is greater than 20 mA, and degree of trueness linearly increasing in the range between said values;
13. Given the electrical dispersion current passing through the ground conductor, the fact HIGH_DISPERSION_GROUND_CONDUCTOR has degree of trueness 0 if the same is lower than 5 mA, degree of trueness 1 if the same is greater than 10 mA, and degree of trueness linearly increasing in the range between the same;
14. The degree of trueness of the fact ANOMALOUS_ABSORPTION is given by the maximum degree of trueness among the facts EXCESSIVE_ABSORPTION, HIGH_ABSORPTION_PROTRACTED, ANOMALOUS_ABSORPTION or, whenever this is greater, by twice the average of the degree of trueness among the same;
15. The degree of trueness of the fact ANOMALOUS_DISPERSION_INTERMEDIATE_1 is given by the minimum value of trueness among the facts HIGH_TOTAL_DISPERSION, 1 - the degree of trueness of the fact HIGH_DISPERSION_GROUND_CONDUCTOR and 1 - the degree of trueness of the fact HIGH_ABSORPTION;
16. The degree of trueness of the fact ANOMALOUS_DISPERSION_INTERMEDIATE_2 is given by the minimum value between the degrees of trueness of the facts HIGH_TOTAL_DISPERSION and LOW_ABSORPTION;
17. The degree of trueness of the fact ANOMALOUS_DISPERSION is given by the maximum value among the degrees of trueness of the facts EXCESSIVE_TOTAL_DISPERSION, ANOMALOUS_DISPERSION_INTERMEDIATE_1, and ANOMALOUS_DISPERSION_INTERMEDIATE_2;
18. The degree of trueness of the fact COMPLEX_ANOMALY_INTERMEDIATE_1 is given by the maximum value among 1 and the sum of the degrees of trueness of the facts HIGH_DISPERSION, HIGH_ASYMMETRY, HIGH_NOISE and HIGH_TOTAL_DISPERSION, divided by 3;
19. The degree of trueness of the fact COMPLEX_ANOMALY is given by the maximum value among the degrees of trueness of the facts EXCESSIVE_DISTORTION, EXCESSIVE_ASYMMETRY, EXCESSIVE_NOISE and COMPLEX_ANOMALY_INTERMEDIATE 1;
20. The degree of trueness of the fact DANGER_SITUATION is given by the maximum value among the degrees of trueness of the facts ANOMALOUS_ABSORPTION, ANOMALOUS_DISPERSION, and COMPLEX_ANOMALY.

Upon occurrence of a degree of trueness of the fact DANGER SITUATION exceeding a predetermined threshold, such as 0.75, the device 1 immediately interrupts the supply of electric current to the electrical wiring system 3 without querying the user. It appears evident that in this case the expert system 16 can benefit from a weighted representation of the trueness of the facts, which, as is known, has greater efficacy for solving control problems wherein marginal situations can occur, which are difficult to manage with binary logic. It is underlined, however, that in establishing the degree of trueness of the initial facts (so called "fuzzification") and in determining the final disconnection decision, the application of thresholds is nevertheless necessary, which may be subject to gradual adaptation to the specific characteristics of the specific electrical wiring system by means of suitable interaction with the user.

If the device 1 includes the clock-calendar 55, the values stored in the memory 14 may be combined with one or more times and/or one or more dates and/or one or more time intervals, and the rules stored in the memory 15 can be applied by the expert system 16 corresponding to one or more times and/or one or more dates and/or one or more time Intervals.

Notwithstanding the fact that the rules stored in the memory 15 are predefined, they are preferably modifiable by a qualified technician. In particular, pre-existing rules can be deleted or modified and new rules can be stored in the memory 15. This is preferably attainable by means of a suitable software and interfacing the device which is the subject of the invention to a computer, preferably via an interface of the "Universal Serial Bus" (USB) type. The time slots possibly linked to the rules stored in the memory 15 can similarly be modified. As opposed to the expert system 16 in its non-adaptive version, the classifier 45, by means of the training system 46, learns the characteristics of the loads and the behaviour of the electrical wiring system 3 during the practical use of the latter. The synaptic weights and the transfer functions stored in the memory 15 correspond to a set of situations and corresponding time changes which the classifier 45 has learnt linking them or not to a disconnection decision. The classifier 45, throughout the operation of the electrical wiring system 3, learns to recognise events that can be classified as "normal", constantly updating its parameters. The classifier 45 is therefore responsible for the detection of activity that can be considered as "unusual" within the electrical wiring system 3. More precisely, the classifier 45 processes values stored in the memory 14 on the basis of one or more synaptic weights and transfer functions stored in the memory 15 and emits a decision to disconnect the electrical wiring system 3 from the distribution network 2 if it deems that an anomalous event has occurred. Whenever the classifier 45 emits a disconnection decision, the processor 17 commands the emission of an alarm signal via the systems 71 and/or 72 and commands the actuator 6 to open the switch 5 after a predetermined time interval. The disconnection is delayed because there can be "false alarms", that is whenever the classifier 45 deems as anomalous an event which is not anomalous (for example an event that does not form a part of the normal activity in the electrical wiring system 3 and has occurred for the first time since the installation of the device 1). To prevent an unnecessary disconnection, the device which is the subject of the invention is preferably equipped with the command 50 and with the signalling means 71 by means of which the user of the device is notified of the imminent disconnection decision and can revoke it before the disconnection takes place. In addition to this, the user of the device may command the training system to update the synaptic weights and/or the transfer functions stored in the memory 15, so that the event which has led to the emission of a disconnection decision shall no longer be deemed as anomalous. For example, if the classifier includes a neural network of multilayer perceptron type, the aforementioned update may correspond to updating the synaptic weights and/or transfer functions of one or more neurons of the network.

According to a variant of the electrical safety device which is the subject of the invention, the output of the numerical classifier 45 is equipped with a "low-pass" temporal filter adapted so that a hypothetical disconnection decision is taken into consideration only if requested by the numerical classifier 45 over a given time interval. This has the purpose of avoiding that short transients may lead, on their own, to a disconnect decision.

In order to simplify the creation of the synaptic weights and transfer functions stored in the memory 15 after installation of the device which is the subject of the invention, the latter may include a switch, or an equivalent control, for "learning mode", to be used for a limited time period after installation of the device or after substantial changes in the appliances 4 connected to the electrical wiring system 3, so as to automatically impart the aforementioned command to update the memory 15 without emitting any alarm signal and consequently without requesting the repeated intervention of the user.

If the device 1 includes the clock-calendar 55, the values stored in the memory 14 may be linked to one or more times and/or one or more dates and/or one or more time intervals, and the classifier 45 processes the aforementioned values on the basis of one or more synaptic weights and/or transfer functions stored in the memory 15 as a function of one or more times and/or one or more dates and/or one or more time intervals.

As previously described, the expert system 16 may be adaptive, that is supervised by a further training system. In that case, similarly to the classifier 45, the expert system 16, by means of the aforementioned further training system, learns the characteristics of the loads and the behaviour of the electrical wiring system 3 during the practical use of the latter, updating the thresholds included in the rules stored in the memory 15. More precisely, the rules and the definition of the facts remain fixed whereas the thresholds are updated, for example as described below. Each threshold is initially set to a predetermined value, determined in the factory or by the technician installing the device which is the subject of the invention= Following the generation of a disconnection decision by the expert system 16, the aforementioned training system keeps track of which threshold or thresholds have been violated. Whenever the user of the device which is the subject of the invention confirms the absence of a situation of danger, they can a-posteriori signal the absence of the same by means of the previously described command. As a consequence, the further training system modifies the threshold or thresholds involved, with the purpose of avoiding a generation of a disconnection decision in similar circumstances. In order to avoid an effective "drift of the system towards inactivity", for each threshold not only a predefined starting value, but also a maximum (or minimum) value that cannot be exceeded, is preferably defined.

As previously clarified, also in the case wherein the expert system is adaptive, the disconnection commanded by the same is never delayed. The instruction to update always follows the material execution of the disconnection of the electrical wiring system 3 from the distribution network 2, and can preferably be imparted by the user of the device which is the subject of the invention while rearming the switch.

In addition to what was stated, if the device 1 includes the clock-calendar 55, the values stored in the memory 14 can be linked to one or more times and/or one or more dates and/or one or more time intervals, and the further training system is adapted to modify the aforementioned thresholds as a function of a time and/or a date as measured by the clock-calendar 55, or as a function of a time interval as measured by the clock-calendar 55.

For the avoidance of doubt, it is deemed appropriate to clarify here that, in the device which is the subject of the invention, the learning by means of the training system 46 takes place on the basis of the statistical properties of the overall activity of the electrical wiring system 3. The learning in particular is focused on the aspects of the aforementioned activity which require a high adaptiveness and therefore are poorly suited for being encoded by means of the rules of the expert system 16.

Said aspects focus on the distribution of activity in the chosen frequency bands, and possibly in the corresponding time course as measured by means of the integrators and differentiators. The training system 46 therefore realizes a supervised type of learning, in the sense that it learns to recognise the statistical limits of normality of the given electrical wiring system, if appropriate separately for time slots. This does not merely correspond to determining the intervals of acceptability for the intensity of activity in the various frequency bands but instead, in a more complex manner, corresponds to evaluating which "patterns" of activity can arise and learning the same, so as not to generate a disconnection decision upon their occurrence. The training algorithms that enable this are essentially known and shall therefore not be described.

In the light of what was stated above, the device which is the subject of the invention is capable of:
- interrupting the supply of electric current to the electrical wiring system 3, or to part of the same, upon occurrence, within the electrical wiring system 3m of electrical malfunctions which, while being potentially dangerous for the safety of persons and/or property, cause electrical overloads or dispersions not sufficient to trigger the intervention of a thermal-magnetic circuit breaker or residual current device;
- providing protection against anomalous functioning of an appliance of the electrical wiring system 3 not giving rise to overloads, nor to anomalous increases of the dispersion current;
- providing protection against situations of danger caused, rather than by technical malfunctions, but by an erroneous utilisation of the electrical appliances connected to the electrical wiring system 3 (such as in the case of an oven that is forgotten switched on);
- providing protection against situations of danger caused by environmental factors (such as a fire, a gas leak, a flooding or an earthquake) which, indirectly, may cause malfunctions in the electrical wiring system or be aggravated by the operation of the same.

In addition to what was stated, the device which is the subject of the invention, rather than being installed downstream of the devices for disconnection, safety and measurement 8 required by the present regulations, may replace them. The device which is the subject of the invention, by monitoring and communicating the absorption of electric current by the electrical wiring system 3, may in fact serve not only as an electrical safety device, but also as a measurement apparatus.

The device which is the subject of the invention may finally serve as a protection device for the loads of the electrical wiring system 3 against anomalies of electrical supply originating from the distribution network 2, such as overvoltages, excessive distortion, excessive asymmetry, excessive imbalance between phases, excessive intensity of conducted electromagnetic interference, inversion of the phases and loss of one or more phases or of the neutral conductor.

Predicated on the provided description for a preferred means of realisation, it shall be obvious that certain changes may be introduced by a technician skilled in the art without exiting from the realm of the invention as defined in the following claims.

## Claims

1. An electrical safety device (1) connectable between an electrical wiring system (3) and an electrical power source (2) comprising at least two active conductors, said device (1) including:
• at least one switch (5) interposed between said electrical wiring system (3) and said electrical energy source (2) when said device (1) is connected between them;
• moving means (6) of said switch (5) between at least a first position at which said switch (5) is closed and a second position at which said switch (5) is open;
• controlling means (7) of said moving means,
**characterized in that** said controlling means (7) comprise:
• for each of said active conductors of the electrical power source (2), a first voltage measurement stage (10) connected between said active conductor and said electrical wiring system (3) when said device (1) is connected between said electrical wiring system (3) and said electrical power source (2);
• for each of said active conductors of the electrical power source (2), a second electrical current measurement stage (11) connected between said active conductor and said electrical wiring system (3) when said device (1) is connected between said electrical wiring system (3) and said electrical power source (2);
• for each of said measurement stages (10, 11), at least a third conditioning stage (12) connected in cascade to said measurement stage (10, 11), said third conditioning stage (12) being adapted to break down the electrical activity of said system (3), as measured by said first and second measurement stages (10, 11), into multiple frequency bands;
• for each of said frequency bands into which the electrical activity of said system (3) is broken down in each of said third conditioning stages (12), at least one analog-digital converter (13) connected in cascade to said third conditioning stage (12);
• a first memory (14) adapted to store values output from said analog-digital converters (13);
• a second memory (15) adapted to store:
- a plurality of rules of an expert system (16)
and
- a plurality of synaptic weights and/or transfer functions of a plurality of calculating units of a numerical classifier (45);
• processing means (16, 45, 46) adapted to process values stored in said first memory (14),
said processing means comprising:
- an expert system (16) based on said rules and adapted to apply said rules to one or more of the values stored in said first memory (14),
said expert system (16) comprising an inference engine adapted to process at least one fact,
said expert system (16) being adapted to infer the truth of one or more of said facts by applying one or more thresholds, comprised in said rules, to said values stored in said first memory (14), and to output a decision to disconnect said electrical wiring system (3) from said electrical energy source (2) when it ascertains a correspondence between one or more of said facts and at least one of said rules stored in said second memory (15);
- a numerical classifier (45) comprising a plurality of calculating units the synaptic weights and/or the transfer functions of which correspond to said synaptic weights and/or said transfer functions stored in said second memory (15), said classifier (45) being adapted to receive as input one or more values stored in said first memory (14), said classifier (45) being adapted to output a decision to disconnect said electrical wiring system (3) from said power source (2) as a function of the values received as input;
- a training system (46) supervising said classifier (45), said training system (46) being connected to said first and second memory (14, 15), and being adapted to store synaptic weights and/or transfer functions in said second memory (15), said training system (46) being further adapted to modify synaptic weights and/or transfer functions possibly already stored in said second memory (15);
• emitting means (71) of an alarm signal when said expert system (16) or said classifier (45) emit a decision to disconnect said electrical wiring system (3) from said electrical energy source (2);
• a processor (17) adapted to process values assumed by parameters obtainable by means of algorithms having as input one or more of said values output by said analog-digital converters (13), said values calculated by said processor (17) being suitable for storage in said first memory (14) and for processing by said processing means (16, 45, 46),
said processor (17) being furthermore adapted to control said moving means (6) so as to immediately determine a movement of said switch (5) from said first position to said second position when said expert system (16) emits a decision to disconnect said electrical wiring system (3), without requesting the consent of a user of said device (1),
said controlling means comprising:
- revoking means (50) of a disconnection decision emitted by said classifier (45) so as to prevent said processor (17) from determining a movement of said switch (5) from said first position to said second position, said revoking means (50) being controllable by said user;
- controlling means (51) adapted to control said training means (46) so as to modify at least one of said synaptic weights and/or of said transfer functions stored in said second memory (15) on the basis of values stored in said first memory (14), said controlling means (51) being controllable by said user,
said processor (17), whenever said classifier (45) emits a decision to disconnect said electrical wiring system (3), being furthermore adapted to:
• command said emitting means (71) in order to emit an alarm signal
and
• command said moving means in order to determine a movement of said switch (5) from said first position to said second position after a given time interval if, meanwhile, said decision to disconnect emitted by said classifier (45) is not revoked by said user by means of said revoking means (50).

2. A device according to claim 1, **characterized in that** said controlling means comprise a clock-calendar (55),
said classifier (45) being adapted to process the values stored in said first memory (14) on the basis of one or more synaptic weights and/or transfer functions stored in said second memory (15) as a function of a time and/or of a date as measured by said clock-calendar (55) or as a function of a time interval as measured by said clock-calendar (55),
said training system (46) being adapted to store one or more synaptic weights and/or transfer functions in said second memory (15) by combining them with a time and/or to a date as measured by said clock-calendar (55) or by combining them with a time interval as measured by said clock-calendar (55),
said training system (46) being adapted to modify one or more synaptic weights and/or transfer functions stored in said second memory (15) as a function of a time and/or of a date as measured by said clock-calendar (55) or as a function of the time interval as measured by said clock-calendar (55) or by combining them with a time and/or a date as measured by said clock-calendar (55) or by combining them with a time interval as measured by said clock-calendar (55).

3. A device according to claim 1, **characterized in that** said controlling means comprise a clock-calendar (55),
said first memory (14) being further adapted to store at least one time and/or at least one date and/or at least one interval of time as measured by said clock-calendar (55),
said expert system (16) being adapted to apply said rules at said time and/or said date and/or said interval stored in said first memory (14).

4. A device (1) according to any one of the preceding claims, **characterized in that** said controlling means (7) comprise, for each of said conductors:
• signal attenuating means (20) at frequencies no lower than 250 Hz, said attenuating means (20) being connected between said conductor and said electrical wiring system (3) when said device (1) is connected between them, and **in that** each of said first measurement stages (10) comprises:
- first measuring means (23) of a voltage between a first terminal of said attenuating means (20) associated to the same conductor to which said first measurement stage (10) is associated, and the ground potential;
- second measuring means (24) of a voltage between a second terminal of said attenuating means (20) associated to the same conductor to which said first measurement stage (10) is associated, and said ground potential;
- third measuring means (25) of a voltage between said first and second terminals of said attenuating means (20) associated to the same conductor to which said first measurement stage (10) is associated,
said controlling means (7) comprising one of said third conditioning stages (12) connected in cascade to each of said first, second and third measuring means (23, 24, 25).

5. A device (1) according to any one of the preceding claims, **characterized in that** said second measuring means (11) comprise:
- a first electrical current measurement transformer (30) coupled to a first load resistor (31), said first transformer (30) being connected between said conductor and said electrical wiring system (3) when said device (1) is connected between them;
- fourth measuring means (32) of a voltage between two terminals of said
first resistor (31),
said controlling means (7) comprising one of said third conditioning stages (12) connected in cascade to each of said fourth measuring means (32).

6. A device according to any one of the preceding claims, **characterized in that** said controlling means comprise a fourth measurement stage (56) of the total electrical dispersion current measured as sum of the currents of all said active conductors in said electrical energy source (2), said fourth stage (56) being connected between all said active conductors and said electrical wiring system (3) when said device is connected between said electrical energy source (2) and said electrical wiring system (3), said controlling means comprising one of said third conditioning stages (12) connected in cascade to said fourth measurement stage (56).

7. A device according to claim 6, **characterized in that** said fourth measurement stage (56) comprises:
- a second total electrical dispersion current measurement transformer (60) coupled to a second load resistor (61), said second transformer (60) being connected in series to all said first transformers (30), said second transformer (60) being further connected between all said first transformers (30) and said electrical wiring system (3) when said device is connected between said electrical energy source (2) and said electrical wiring system (3);
- fifth measuring means (62) of a voltage between two terminals of said second resistor (61),
said third conditioning stage (12) being connected in cascade to said fifth measuring means (62).

8. A device according to any one of the preceding claims, **characterized in that** said controlling means comprise a fifth measurement stage (65) of the electrical dispersion current passing through the ground conductor, said fifth stage (65) being connected between the ground connector of said electrical energy source (2) and the ground conductor of said electrical wiring system (3) when said device is connected between said electrical energy source (2) and said electrical wiring system (3), said controlling means comprising one of said third conditioning stages (12) connected in cascade to said fifth measurement stage (65).

9. A device according to claim 8, **characterized in that** said fifth measurement stage (65) comprises:
- a third measurement transformer (66) of the electrical dispersion current passing through a ground conductor coupled to a third load resistor (67), said third transformer (66) being connected between the ground conductor of said electrical energy source (2) and the ground conductor of said electrical wiring system (3) when said device is connected between said electrical energy source (2) and said electrical wiring system (3);
- sixth measuring means (68) of a voltage between two terminals of said third resistor (67),
said third conditioning stage (12) being connected in cascade to said sixth measuring means (68).

10. A device according to any one of the preceding claims, **characterized in that** it comprises a dedicated ground electrode, said controlling means comprising a sixth measurement stage of a voltage between said ground electrode and the ground conductor of said electrical wiring system when said device is connected between said electrical energy source and said electrical wiring system, said controlling means comprising one of said third conditioning stages connected in cascade to said sixth measurement stage.

11. A device (1) according to any one of the preceding claims, **characterized in that** each of said third conditioning stages (12) comprises:
- at least one variable gain amplifier (35) connected in cascade to said measuring means (23, 24, 25, 32, 62, 68);
- a multiplicity of conditioner instances (36) each including:
> at least one variable frequency band-pass filter (37) connected in cascade to said first variable gain amplifier (35);
> at least one second variable gain amplifier (39) connected in cascade to said band-pass filter (37),
said controlling means comprising one of said analog-digital converters (13) for each said conditioning instance (36), said analog-digital converters (13) respectively being connected in cascade to said second variable gain amplifiers (36).

12. A device according to claim 11, **characterized in that** one or more of said conditioner instances (36) further comprises:
> at least one rectifier (38) connected in series between said band-pass filter (37) and said second variable gain amplifier (39);
and/or
> at least one differentiator (40) connected in cascade to said second variable gain amplifier (39), said device comprising one of said analog-digital converters (13) also for each of said differentiators (40), said further analog-digital converters (13) being connected in cascade to said differentiators (40), respectively;
and/or
> at least one integrator (41) connected in cascade to said second variable gain amplifier (39), said device comprising one of said analog-digital converters (13) also for each of said integrators (41), said further analog-digital converters (13) being connected in cascade to said integrators (41), respectively.

13. A device according to claim 1, **characterized in that** it comprises:
• detection means (70) of seismic activity and/or of presence of smoke and/or combustible gas and/or flooding in the place where said device is installed, said processor (17) being connected to said detection means (70) and being adapted to control said moving means (6) so as to determine a movement of said switch (5) from said first position to said second position when said detection means (70) detect a seismic activity of intensity higher than a predetermined threshold or a concentration of smoke or gas higher than a predetermined threshold or a flooding.

14. A device according to claim 1, **characterized in that** it comprises:
• radio frequency electromagnetic wave transceiver means (72), said transceiver means (72) being adapted to:
- transmit waves encoding said alarm signal and waves encoding information related to values stored in said first memory (14) and/or second memory (15), and to disconnection decisions possibly emitted by said expert system (16) or by said classifier (45);
- receive waves encoding an alarm signal and/or a disconnection control coming from apparatuses external to said device,
said processor (17) being adapted to control said emitting means (71) so as to emit an alarm signal when said transceiver means (72) receive said waves encoding an alarm signal,
said processor (17) being further adapted to control said moving means (6) so as to determine a movement of said switch (5) from said first position to said second position when said transceiver means (72) receive said wave encoding a disconnection command.

15. A device according to claim 1, **characterized in that** it comprises:
• a third memory adapted to store values stored in said first memory (14) and disconnection decisions possibly taken by said expert system (16) or by said classifier (45).

## Patentansprüche

1. Elektrische Sicherheitsvorrichtung (1), die zwischen einem elektrischen Verkabelungssystem (3) und einer elektrischen Stromquelle (2) mit mindestens zwei aktiven Leitern verbindbar ist, wobei die Vorrichtung (1) umfasst:
• mindestens einen Schalter (5), der zwischen das elektrische Verdrahtungssystem (3) und die elektrische Energiequelle (2) eingefügt ist, wenn die Vorrichtung (1) dazwischen geschaltet ist;
• Bewegungsmittel (6) des Schalters (5) zwischen mindestens einer ersten Position, in der der Schalter (5) geschlossen ist, und einer zweiten Position, in der der Schalter (5) geöffnet ist;
• Steuermittel (7) der Bewegungsmittel,
**dadurch gekennzeichnet, dass** die Steuermittel (7) umfassen:
• für jeden der aktiven Leiter der elektrischen Stromquelle (2) eine erste Spannungsmessstufe (10), die zwischen dem aktiven Leiter und dem elektrischen Verdrahtungssystem (3) angeschlossen ist, wenn die Vorrichtung (1) zwischen dem elektrischen Verdrahtungssystem ( 3) und die elektrische Energiequelle (2);
• für jeden der aktiven Leiter der elektrischen Stromquelle (2) eine zweite Strommessstufe (11), die zwischen dem aktiven Leiter und dem elektrischen Verdrahtungssystem (3) geschaltet ist, wenn die Vorrichtung (1) zwischen das elektrische Verdrahtungssystem geschaltet ist (3) und die elektrische Energiequelle (2);
• für jede der Messstufen (10, 11) mindestens eine dritte Konditionierungsstufe (12), die in Kaskade mit der Messstufe (10, 11) verbunden ist, wobei die dritte Konditionierungsstufe (12) angepasst ist, um die elektrische Aktivität von . zu unterbrechen das System (3), gemessen durch die ersten und zweiten Messstufen (10, 11), in mehrere Frequenzbänder;
• für jedes der Frequenzbänder, in die die elektrische Aktivität des Systems (3) in jeder der dritten Aufbereitungsstufen (12) zerlegt wird, mindestens einen Analog-Digital-Wandler (13), der in Kaskade mit der dritten Aufbereitungsstufe verbunden ist ( 12);
• einen ersten Speicher (14), der dazu ausgelegt ist, von den Analog-Digital-Umsetzern (13) ausgegebene Werte zu speichern;
• einen zweiten Speicher (15) zum Speichern von:
- mehrere Regeln eines Expertensystems (16)
und
- mehrere synaptische Gewichte und/oder Übertragungsfunktionen mehrerer Recheneinheiten eines numerischen Klassifikators (45);
• Verarbeitungsmittel (16, 45, 46), die angepasst sind, um in dem ersten Speicher (14) gespeicherte Werte zu verarbeiten,
wobei das Verarbeitungsmittel umfasst:
- ein Expertensystem (16) basierend auf den Regeln und angepasst, um die Regeln auf einen oder mehrere der Werte anzuwenden, die in dem ersten Speicher (14) gespeichert sind,
wobei das Expertensystem (16) eine Inferenzmaschine umfasst, die angepasst ist, um mindestens eine Tatsache zu verarbeiten,
wobei das Expertensystem (16) angepasst ist, um die Wahrheit von einem oder mehreren der Tatsachen abzuleiten, indem ein oder mehrere Schwellenwerte, die in den Regeln enthalten sind, auf die in dem ersten Speicher (14) gespeicherten Werte angewendet werden, und eine Entscheidung zum Trennen auszugeben das elektrische Verdrahtungssystem (3) von der elektrischen Energiequelle (2), wenn es eine Übereinstimmung zwischen einem oder mehreren der Tatsachen und mindestens einer der Regeln, die in dem zweiten Speicher (15) gespeichert sind, feststellt;
- einen numerischen Klassifizierer (45), der eine Vielzahl von Recheneinheiten umfasst, deren synaptische Gewichte und/oder deren Übertragungsfunktionen den in dem zweiten Speicher (15) gespeicherten synaptischen Gewichten und/oder Übertragungsfunktionen entsprechen, wobei der Klassifizierer (45) angepasst ist um als Eingabe einen oder mehrere in dem ersten Speicher (14) gespeicherte Werte zu empfangen, wobei der Klassifizierer (45) angepasst ist, um eine Entscheidung zum Trennen des elektrischen Verkabelungssystems (3) von der Stromquelle (2) als Funktion der Werte auszugeben als Eingabe empfangen;
- ein Trainingssystem (46), das den Klassifizierer (45) überwacht, wobei das Trainingssystem (46) mit dem ersten und zweiten Speicher (14, 15) verbunden ist und dazu angepasst ist, synaptische Gewichte und/oder Übertragungsfunktionen in dem zweiten Speicher zu speichern ( 15), wobei das Trainingssystem (46) ferner angepasst ist, um synaptische Gewichte und/oder Übertragungsfunktionen zu modifizieren, die möglicherweise bereits in dem zweiten Speicher (15) gespeichert sind;
• Ausgabemittel (71) eines Alarmsignals, wenn das Expertensystem (16) oder der Klassifizierer (45) eine Entscheidung aussenden, das elektrische Verdrahtungssystem (3) von der elektrischen Energiequelle (2) zu trennen;
• einen Prozessor (17), der angepasst ist, Werte zu verarbeiten, die von Parametern angenommen werden, die mittels Algorithmen erhältlich sind, die als Eingang einen oder mehrere der Werte haben, die von den Analog-Digital-Umsetzern (13) ausgegeben werden, wobei die von dem Prozessor (17) berechneten Werte zur Speicherung geeignet sind in dem ersten Speicher (14) und zur Verarbeitung durch die Verarbeitungsmittel (16, 45, 46),
wobei der Prozessor (17) ferner dazu ausgelegt ist, die Bewegungseinrichtung (6) zu steuern, um sofort eine Bewegung des Schalters (5) von der ersten Position in die zweite Position zu bestimmen, wenn das Expertensystem (16) eine Entscheidung zum Trennen der ausgibt elektrisches Verkabelungssystem (3), ohne die Zustimmung eines Benutzers des Geräts (1) einzuholen,
wobei das Steuermittel umfasst:
- Widerrufsmittel (50) einer Trennungsentscheidung, die von dem Klassifizierer (45) ausgegeben wird, um zu verhindern, dass der Prozessor (17) eine Bewegung des Schalters (5) von der ersten Position in die zweite Position bestimmt, wobei die Widerrufsmittel (50) durch den Benutzer steuerbar sein;
- Steuermittel (51), die geeignet sind, die Trainingsmittel (46) zu steuern, um mindestens eines der synaptischen Gewichte und/oder der Übertragungsfunktionen, die in dem zweiten Speicher (15) gespeichert sind, auf der Grundlage von Werten, die in dem ersten Speicher gespeichert sind, zu modifizieren (14), wobei die Steuereinrichtung (51) durch den Benutzer steuerbar ist,
wobei der Prozessor (17), wann immer der Klassifizierer (45) eine Entscheidung zum Trennen des elektrischen Verkabelungssystems (3) ausgibt, weiterhin angepasst ist zum:
• Befehl an das Sendemittel (71) zum Aussenden eines Alarmsignals
und
• Befehl an die Bewegungsmittel, um eine Bewegung des Schalters (5) von der ersten Position in die zweite Position nach einem gegebenen Zeitintervall zu bestimmen, wenn in der Zwischenzeit die von dem Klassifizierer (45) abgegebene Entscheidung zum Trennen von dem Benutzer nicht widerrufen wird mittels des Widerrufsmittels (50).

2. Vorrichtung nach Anspruch 1, **dadurch gekennzeichnet, dass** die Steuermittel einen Uhrenkalender (55) umfassen.
wobei der Klassifizierer (45) angepasst ist, um die im ersten Speicher (14) gespeicherten Werte auf der Grundlage einer oder mehrerer synaptischer Gewichte und/oder Übertragungsfunktionen, die im zweiten Speicher (15) gespeichert sind, als Funktion einer Zeit zu verarbeiten und/oder eines Datums, wie es von dem Uhrenkalender (55) gemessen wird, oder als Funktion eines Zeitintervalls, wie es von dem Uhrenkalender (55) gemessen wird,
wobei das Trainingssystem (46) angepasst ist, um eine oder mehrere synaptische Gewichte und/oder Übertragungsfunktionen in dem zweiten Speicher (15) zu speichern, indem sie mit einer Zeit und/oder einem Datum, wie durch den Uhrenkalender (55) gemessen, kombiniert werden, oder durch Kombinieren mit einem Zeitintervall, wie es durch den Uhrenkalender (55) gemessen wird, wobei das Trainingssystem (46) angepasst ist, um eine oder mehrere synaptische Gewichte und/oder Übertragungsfunktionen, die in dem zweiten Speicher (15) gespeichert sind, als Funktion einer Zeit und/oder eines Datums, wie durch den Uhrenkalender (55) gemessen, zu modifizieren. oder als Funktion des von dem Uhrenkalender (55) gemessenen Zeitintervalls oder durch Kombinieren mit einer Zeit und/oder einem Datum, wie von dem Uhrenkalender (55) gemessen, oder durch Kombinieren mit einem gemessenen Zeitintervall durch den Uhrkalender (55).

3. Vorrichtung nach Anspruch 1, **dadurch gekennzeichnet, dass** die Steuermittel einen Uhrenkalender (55) umfassen.
wobei der erste Speicher (14) ferner angepasst ist, um mindestens eine Zeit und/oder mindestens ein Datum und/oder mindestens ein Zeitintervall zu speichern, wie durch den Uhrenkalender (55) gemessen.
wobei das Expertensystem (16) angepasst ist, um die Regeln zu der Zeit und/oder das Datum und/oder das Intervall anzuwenden, die in dem ersten Speicher (14) gespeichert sind.

4. Vorrichtung (1) nach einem der vorhergehenden Ansprüche, **dadurch gekennzeichnet, dass** die Steuermittel (7) für jeden der Leiter umfassen:
• Signaldämpfungsmittel (20) bei Frequenzen von nicht weniger als 250 Hz, wobei die Dämpfungsmittel (20) zwischen dem Leiter und dem elektrischen Verdrahtungssystem (3) geschaltet sind, wenn die Vorrichtung (1) dazwischen geschaltet ist,
und dass jede der ersten Messstufen (10) umfasst:
- ein erstes Messmittel (23) einer Spannung zwischen einem ersten Anschluss des Dämpfungsmittels (20), das demselben Leiter zugeordnet ist, dem die erste Messstufe (10) zugeordnet ist, und dem Erdpotential;
- ein zweites Messmittel (24) einer Spannung zwischen einem zweiten Anschluss des Dämpfungsmittels (20), das demselben Leiter zugeordnet ist, dem die erste Messstufe (10) zugeordnet ist, und dem Massepotential;
- dritte Messmittel (25) einer Spannung zwischen den ersten und zweiten Anschlüssen der Dämpfungsmittel (20), die dem gleichen Leiter zugeordnet sind, dem die erste Messstufe (10) zugeordnet ist,
wobei die Steuermittel (7) eine der dritten Konditionierungsstufen (12) umfassen, die in Kaskade mit jedem der ersten, zweiten und dritten Messmittel (23, 24, 25) verbunden sind.

5. Vorrichtung (1) nach einem der vorhergehenden Ansprüche, **dadurch gekennzeichnet, dass** die zweiten Messmittel (11) umfassen:
- einen ersten Strommesstransformator (30), der mit einem ersten Lastwiderstand (31) gekoppelt ist, wobei der erste Transformator (30) zwischen den Leiter und das elektrische Verdrahtungssystem (3) geschaltet ist, wenn die Vorrichtung (1) dazwischen geschaltet ist;
- vierte Messmittel (32) einer Spannung zwischen zwei Anschlüssen des ersten Widerstands (31),
wobei das Steuermittel (7) eine der dritten Konditionierungsstufen (12) umfasst, die in Kaskade mit jedem der vierten Messmittel (32) verbunden sind.

6. Vorrichtung nach einem der vorhergehenden Ansprüche, **dadurch gekennzeichnet, dass** die Steuermittel eine vierte Messstufe (56) des gesamten elektrischen Dispersionsstroms, gemessen als Summe der Ströme aller aktiven Leiter in der elektrischen Energiequelle ( 2), wobei die vierte Stufe (56) zwischen alle aktiven Leiter und das elektrische Verdrahtungssystem (3) geschaltet ist, wenn die Vorrichtung zwischen die elektrische Energiequelle (2) und das elektrische Verdrahtungssystem (3) geschaltet ist, wobei die Steuermittel umfassen: eine der dritten Konditionierungsstufen (12) in Kaskade mit der vierten Messstufe (56) verbunden ist.

7. Vorrichtung nach Anspruch 6, **dadurch gekennzeichnet, dass** die vierte Messstufe (56) umfasst:
- einen zweiten Transformator (60) zur Messung des gesamten elektrischen Dispersionsstroms, der mit einem zweiten Lastwiderstand (61) gekoppelt ist, wobei der zweite Transformator (60) mit allen ersten Transformatoren (30) in Reihe geschaltet ist, wobei der zweite Transformator (60) ferner dazwischen geschaltet ist alle ersten Transformatoren (30) und das elektrische Verdrahtungssystem (3), wenn die Vorrichtung zwischen der elektrischen Energiequelle (2) und dem elektrischen Verdrahtungssystem (3) angeschlossen ist;
- fünfte Messmittel (62) einer Spannung zwischen zwei Anschlüssen des zweiten Widerstands (61),
wobei die dritte Konditionierungsstufe (12) in Kaskade mit der fünften Messeinrichtung (62) verbunden ist.

8. Vorrichtung nach einem der vorhergehenden Ansprüche, **dadurch gekennzeichnet, dass** die Steuermittel eine fünfte Messstufe (65) des durch den Erdleiter fließenden elektrischen Dispersionsstroms umfassen, wobei die fünfte Stufe (65) zwischen den Erdungsanschluss geschaltet ist der elektrischen Energiequelle (2) und des Erdleiters des elektrischen Verdrahtungssystems (3), wenn die Vorrichtung zwischen der elektrischen Energiequelle (2) und dem elektrischen Verdrahtungssystem (3) angeschlossen ist, wobei die Steuermittel eines der dritten . umfassen Konditionierungsstufen (12), die in Kaskade mit der fünften Messstufe (65) verbunden sind.

9. Vorrichtung nach Anspruch 8, **dadurch gekennzeichnet, dass** die fünfte Messstufe (65) umfasst:
- einen dritten Messtransformator (66) des elektrischen Dispersionsstroms, der durch einen Erdleiter fließt, der mit einem dritten Lastwiderstand (67) gekoppelt ist, wobei der dritte Transformator (66) zwischen dem Erdleiter der elektrischen Energiequelle (2) und der Erde geschaltet ist Leiter des elektrischen Verdrahtungssystems (3), wenn die Vorrichtung zwischen der elektrischen Energiequelle (2) und dem elektrischen Verdrahtungssystem (3) angeschlossen ist;
- sechste Messmittel (68) einer Spannung zwischen zwei Anschlüssen des dritten Widerstands (67),
wobei die dritte Konditionierungsstufe (12) in Kaskade mit der sechsten Messeinrichtung (68) verbunden ist.

10. Vorrichtung nach einem der vorhergehenden Ansprüche, **dadurch gekennzeichnet, dass** sie eine dedizierte Masseelektrode umfasst, wobei die Steuermittel eine sechste Messstufe einer Spannung zwischen der Masseelektrode und dem Masseleiter des elektrischen Verdrahtungssystems umfassen, wenn die Vorrichtung zwischen die elektrische Energiequelle und das elektrische Verdrahtungssystem geschaltet ist, wobei die Steuermittel eine der dritten Aufbereitungsstufen umfassen, die in Kaskade mit der sechsten Messstufe verbunden sind.

11. Vorrichtung (1) nach einem der vorhergehenden Ansprüche, **dadurch gekennzeichnet, dass** jede der dritten Konditionierungsstufen (12) umfasst:
- mindestens einen Verstärker (35) mit variabler Verstärkung, der in Kaskade mit den Messmitteln (23, 24, 25, 32, 62, 68) verbunden ist;
- eine Vielzahl von Konditionierungsinstanzen (36), von denen jede Folgendes umfasst:
➢ mindestens ein Bandpassfilter (37) mit variabler Frequenz, das in Kaskade mit dem ersten Verstärker mit variabler Verstärkung (35) verbunden ist;
> mindestens einen zweiten Verstärker mit variabler Verstärkung (39), der in Kaskade mit dem Bandpassfilter (37) verbunden ist,
wobei die Steuermittel einen der Analog-Digital-Umsetzer (13) für jede Konditionierungsinstanz (36) umfassen, wobei die Analog-Digital-Umsetzer (13) jeweils in Kaskade mit den zweiten Verstärkern mit variabler Verstärkung (36) verbunden sind.

12. Vorrichtung nach Anspruch 11, **dadurch gekennzeichnet, dass** eine oder mehrere der Konditionierungsinstanzen (36) ferner Folgendes umfassen:
> mindestens einen Gleichrichter (38), der zwischen dem Bandpassfilter (37) und dem zweiten Verstärker (39) mit variabler Verstärkung in Reihe geschaltet ist;
und/oder
> mindestens einen Differenzierer (40), der in Kaskade mit dem zweiten Verstärker mit variabler Verstärkung (39) verbunden ist, wobei die Vorrichtung einen der Analog-Digital-Wandler (13) auch für jeden der Differenzierer (40) umfasst, wobei die weiteren Analog-Digital-Wandler ( 13) in Kaskade mit den Differenzierern (40) verbunden ist;
und/oder
> mindestens einen Integrator (41), der in Kaskade mit dem zweiten Verstärker mit variabler Verstärkung (39) verbunden ist, wobei die Vorrichtung einen der Analog-Digital-Wandler (13) auch für jeden der Integratoren (41) umfasst, die weiteren Analog-Digital-Wandler ( 13) die jeweils in Kaskade mit den Integratoren (41) verbunden sind.

13. Vorrichtung nach Anspruch 1, **dadurch gekennzeichnet, dass** sie umfasst:
• Detektionsmittel (70) für seismische Aktivität und/oder das Vorhandensein von Rauch und/oder brennbarem Gas und/oder Überschwemmung an dem Ort, an dem die Vorrichtung installiert ist, wobei der Prozessor (17) mit den Detektionsmitteln (70) verbunden und angepasst ist um das Bewegungsmittel (6) zu steuern, um eine Bewegung des Schalters (5) von der ersten Position in die zweite Position zu bestimmen, wenn das Erfassungsmittel (70) eine seismische Aktivität mit einer Intensität höher als ein vorbestimmter Schwellenwert oder eine Konzentration von . erfasst Rauch oder Gas höher als ein vorbestimmter Schwellenwert oder eine Überschwemmung.

14. Vorrichtung nach Anspruch 1, **dadurch gekennzeichnet, dass** sie umfasst:
• Sendeempfängermittel (72) für elektromagnetische Hochfrequenzwellen, wobei das Sendeempfängermittel (72) angepasst ist zum:
- Wellen, die das Alarmsignal codieren, und Wellen, die Informationen in Bezug auf im ersten Speicher (14) und/oder im zweiten Speicher (15) gespeicherte Werte codieren, und auf Trennungsentscheidungen, die möglicherweise von dem Expertensystem (16) oder dem Klassifizierer (45) ausgegeben werden. ;
- Empfangen von Wellen, die ein Alarmsignal und/oder eine Trennungskontrolle codieren, die von Geräten außerhalb des Geräts kommen, wobei der Prozessor (17) geeignet ist, die Sendeeinrichtung (71) zu steuern, um ein Alarmsignal auszusenden, wenn die Sendeempfängereinrichtung (72) die Wellen empfängt, die ein Alarmsignal codieren,
wobei der Prozessor (17) ferner geeignet ist, die Bewegungseinrichtung (6) zu steuern, um eine Bewegung des Schalters (5) von der ersten Position in die zweite Position zu bestimmen, wenn die Transceivereinrichtung (72) die Wellencodierung eines Unterbrechungsbefehls empfängt.

15. Vorrichtung nach Anspruch 1, **dadurch gekennzeichnet, dass** sie umfasst:
• einen dritten Speicher, der angepasst ist, um in dem ersten Speicher (14) gespeicherte Werte und möglicherweise von dem Expertensystem (16) oder von dem Klassifizierer (45) getroffene Trennungsentscheidungen zu speichern.

## Revendications

1. Dispositif de sécurité électrique (1) connectable entre un système de câblage électrique (3) et une source d'alimentation électrique (2) comprenant au moins deux conducteurs actifs, ledit dispositif (1) comprenant :
• au moins un interrupteur (5) interposé entre ledit système de câblage électrique (3) et ladite source d'énergie électrique (2) lorsque ledit dispositif (1) est connecté entre eux ;
• des moyens de déplacement (6) dudit interrupteur (5) entre au moins une première position à laquelle ledit interrupteur (5) est fermé et une seconde position à laquelle ledit interrupteur (5) est ouvert ;
• des moyens de commande (7) desdits moyens de déplacement,
**caractérisé en ce que** lesdits moyens de commande (7) comprennent :
• pour chacun desdits conducteurs actifs de la source d'alimentation électrique (2), un premier étage de mesure de tension (10) connecté entre ledit conducteur actif et ledit système de câblage électrique (3) lorsque ledit dispositif (1) est connecté entre ledit système de câblage électrique ( 3) et ladite source d'alimentation électrique (2) ;
• pour chacun desdits conducteurs actifs de la source d'alimentation électrique (2), un deuxième étage de mesure de courant électrique (11) connecté entre ledit conducteur actif et ledit système de câblage électrique (3) lorsque ledit dispositif (1) est connecté entre ledit système de câblage électrique (3) et ladite source d'alimentation électrique (2) ;
• pour chacun desdits étages de mesure (10, 11), au moins un troisième étage de conditionnement (12) connecté en cascade audit étage de mesure (10, 11), ledit troisième étage de conditionnement (12) étant apte à décomposer l'activité électrique de ledit système (3), tel que mesuré par lesdits premier et second étages de mesure (10, 11), dans de multiples bandes de fréquences ;
• pour chacune desdites bandes de fréquences dans lesquelles l'activité électrique dudit système (3) est décomposée dans chacun desdits troisièmes étages de conditionnement (12), au moins un convertisseur analogique-numérique (13) connecté en cascade audit troisième étage de conditionnement ( 12);
• une première mémoire (14) adaptée pour stocker des valeurs sorties desdits convertisseurs analogique-numérique (13) ;
• une seconde mémoire (15) adaptée pour stocker :
- une pluralité de règles d'un système expert (16)
et
- une pluralité de poids synaptiques et/ou de fonctions de transfert d'une pluralité d'unités de calcul d'un classificateur numérique (45) ;
• des moyens de traitement (16, 45, 46) adaptés pour traiter des valeurs stockées dans ladite première mémoire (14),
lesdits moyens de traitement comprenant :
- un système expert (16) basé sur lesdites règles et adapté pour appliquer lesdites règles à une ou plusieurs des valeurs stockées dans ladite première mémoire (14),
ledit système expert (16) comprenant un moteur d'inférence adapté pour traiter au moins un fait,
ledit système expert (16) étant adapté pour déduire la vérité d'un ou plusieurs desdits faits en appliquant un ou plusieurs seuils, compris dans lesdites règles, auxdites valeurs stockées dans ladite première mémoire (14), et pour sortir une décision de déconnexion ledit système de câblage électrique (3) à partir de ladite source d'énergie électrique (2) lorsqu'il constate une correspondance entre un ou plusieurs desdits faits et au moins une desdites règles stockées dans ladite seconde mémoire (15) ;
- un classificateur numérique (45) comprenant une pluralité d'unités de calcul dont les poids synaptiques et/ou les fonctions de transfert correspondent auxdits poids synaptiques et/ou auxdites fonctions de transfert stockés dans ladite seconde mémoire (15), ledit classificateur (45) étant adapté pour recevoir en entrée une ou plusieurs valeurs stockées dans ladite première mémoire (14), ledit classificateur (45) étant adapté pour sortir une décision de déconnecter ledit système de câblage électrique (3) de ladite source d'alimentation (2) en fonction des valeurs reçu en entrée;
- un système d'apprentissage (46) supervisant ledit classificateur (45), ledit système d'apprentissage (46) étant connecté auxdites première et seconde mémoires (14, 15), et étant adapté pour stocker des poids synaptiques et/ou des fonctions de transfert dans ladite seconde mémoire ( 15), ledit système d'apprentissage (46) étant en outre adapté pour modifier des poids synaptiques et/ou des fonctions de transfert éventuellement déjà mémorisés dans ladite seconde mémoire (15) ;
• des moyens d'émission (71) d'un signal d'alarme lorsque ledit système expert (16) ou ledit classificateur (45) émettent une décision de déconnexion dudit système de câblage électrique (3) de ladite source d'énergie électrique (2) ;
• un processeur (17) adapté pour traiter des valeurs prises par des paramètres pouvant être obtenus au moyen d'algorithmes ayant comme entrée une ou plusieurs desdites valeurs sorties par lesdits convertisseurs analogique-numérique (13), lesdites valeurs calculées par ledit processeur (17) étant aptes à être stockées dans ladite première mémoire (14) et pour le traitement par lesdits moyens de traitement (16, 45, 46),
ledit processeur (17) étant en outre adapté pour commander lesdits moyens de déplacement (6) de manière à déterminer immédiatement un mouvement dudit interrupteur (5) de ladite première position à ladite seconde position lorsque ledit système expert (16) émet une décision de déconnexion dudit système de câblage électrique (3), sans demander le consentement d'un utilisateur dudit dispositif (1),
lesdits moyens de commande comprenant :
- des moyens de révocation (50) d'une décision de déconnexion émise par ledit classificateur (45) de manière à empêcher ledit processeur (17) de déterminer un mouvement dudit interrupteur (5) de ladite première position à ladite seconde position, lesdits moyens de révocation (50) être contrôlable par ledit utilisateur ;
- des moyens de contrôle (51) adaptés pour contrôler lesdits moyens d'apprentissage (46) de manière à modifier au moins l'un desdits poids synaptiques et/ou desdites fonctions de transfert stockés dans ladite seconde mémoire (15) sur la base de valeurs stockées dans ladite première mémoire (14), lesdits moyens de commande (51) pouvant être commandés par ledit utilisateur,
ledit processeur (17), chaque fois que ledit classificateur (45) émet une décision de déconnexion dudit système de câblage électrique (3), étant en outre adapté à :
• commander lesdits moyens d'émission (71) afin d'émettre un signal d'alarme et
• commander lesdits moyens de déplacement afin de déterminer un déplacement dudit interrupteur (5) de ladite première position à ladite deuxième position après un intervalle de temps donné si, entre-temps, ladite décision de déconnexion émise par ledit classificateur (45) n'est pas révoquée par ledit utilisateur au moyen desdits moyens de révocation (50).

2. Dispositif selon la revendication 1, **caractérisé en ce que** lesdits moyens de commande comprennent une horloge-calendrier (55),
ledit classificateur (45) étant adapté pour traiter les valeurs stockées dans ladite première mémoire (14) sur la base d'un ou plusieurs poids synaptiques et/ou fonctions de transfert stockés dans ladite seconde mémoire (15) en fonction d'un temps et/ou d'une date telle que mesurée par ledit horloge-calendrier (55) ou en fonction d'un intervalle de temps tel que mesuré par ledit horloge-calendrier (55), ledit système d'apprentissage (46) étant adapté pour stocker un ou plusieurs poids synaptiques et/ou fonctions de transfert dans ladite seconde mémoire (15) en les combinant avec une heure et/ou une date telles que mesurées par ledit horloge-calendrier (55) ou en les combinant avec un intervalle de temps tel que mesuré par ledit horloge-calendrier (55),
ledit système d'apprentissage (46) étant adapté pour modifier un ou plusieurs poids synaptiques et/ou fonctions de transfert stockés dans ladite seconde mémoire (15) en fonction d'une heure et/ou d'une date telle que mesurée par ladite horloge-calendrier (55) soit en fonction de l'intervalle de temps mesuré par ladite horloge-calendrier (55) ou en les combinant avec une heure et/ou une date telles que mesurées par ladite horloge-calendrier (55) ou en les combinant avec un intervalle de temps tel que mesuré par ledit horloge-calendrier (55).

3. Dispositif selon la revendication 1, **caractérisé en ce que** lesdits moyens de commande comprennent une horloge-calendrier (55),
ladite première mémoire (14) étant en outre adaptée pour stocker au moins une heure et/ou au moins une date et/ou au moins un intervalle de temps tels que mesurés par ledit horloge-calendrier (55),
ledit système expert (16) étant adapté pour appliquer lesdites règles à ladite heure et/ou ladite date et/ou ledit intervalle stockés dans ladite première mémoire (14).

4. Dispositif (1) selon l'une quelconque des revendications précédentes, **caractérisé en ce que** lesdits moyens de commande (7) comprennent, pour chacun desdits conducteurs :
• un moyen d'atténuation de signal (20) à des fréquences non inférieures à 250 Hz, ledit moyen d'atténuation (20) étant connecté entre ledit conducteur et ledit système de câblage électrique (3) lorsque ledit dispositif (1) est connecté entre eux,
et **en ce que** chacun desdits premiers étages de mesure (10) comprend :
- des premiers moyens de mesure (23) d'une tension entre une première borne desdits moyens d'atténuation (20) associée au même conducteur auquel ledit premier étage de mesure (10) est associé, et le potentiel de masse ;
- des seconds moyens de mesure (24) d'une tension entre une seconde borne desdits moyens d'atténuation (20) associée au même conducteur auquel est associé ledit premier étage de mesure (10), et ledit potentiel de masse ;
- des troisièmes moyens de mesure (25) d'une tension entre lesdites première et deuxième bornes desdits moyens d'atténuation (20) associés au même conducteur auquel est associé ledit premier étage de mesure (10), lesdits moyens de commande (7) comprenant l'un desdits troisièmes étages de conditionnement (12) connectés en cascade à chacun desdits premier, deuxième et troisième moyens de mesure (23, 24, 25).

5. Dispositif (1) selon l'une quelconque des revendications précédentes, **caractérisé en ce que** lesdits seconds moyens de mesure (11) comprennent :
- un premier transformateur de mesure de courant électrique (30) couplé à une première résistance de charge (31), ledit premier transformateur (30) étant connecté entre ledit conducteur et ledit système de câblage électrique (3) lorsque ledit dispositif (1) est connecté entre eux ;
- des quatrièmes moyens de mesure (32) d'une tension entre deux bornes de ladite première résistance (31),
lesdits moyens de commande (7) comprenant l'un desdits troisièmes étages de conditionnement (12) connectés en cascade à chacun desdits quatrièmes moyens de mesure (32).

6. Dispositif selon l'une quelconque des revendications précédentes, **caractérisé en ce que** lesdits moyens de commande comprennent un quatrième étage de mesure (56) du courant électrique total de dispersion mesuré comme somme des courants de tous lesdits conducteurs actifs dans ladite source d'énergie électrique ( 2), ledit quatrième étage (56) étant connecté entre tous lesdits conducteurs actifs et ledit système de câblage électrique (3) lorsque ledit dispositif est connecté entre ladite source d'énergie électrique (2) et ledit système de câblage électrique (3), lesdits moyens de commande comprenant l'un desdits troisièmes étages de conditionnement (12) connecté en cascade audit quatrième étage de mesure (56).

7. Dispositif selon la revendication 6, **caractérisé en ce que** ledit quatrième étage de mesure (56) comprend :
- un deuxième transformateur de mesure de courant de dispersion électrique totale (60) couplé à une deuxième résistance de charge (61), ledit deuxième transformateur (60) étant connecté en série à tous lesdits premiers transformateurs (30), ledit deuxième transformateur (60) étant en outre connecté entre tous lesdits premiers transformateurs (30) et ledit système de câblage électrique (3) lorsque ledit dispositif est connecté entre ladite source d'énergie électrique (2) et ledit système de câblage électrique (3) ;
- des cinquièmes moyens de mesure (62) d'une tension entre deux bornes de ladite seconde résistance (61),
ledit troisième étage de conditionnement (12) étant connecté en cascade audit cinquième moyen de mesure (62).

8. Dispositif selon l'une quelconque des revendications précédentes, **caractérisé en ce que** lesdits moyens de commande comprennent un cinquième étage de mesure (65) du courant électrique de dispersion traversant le conducteur de masse, ledit cinquième étage (65) étant connecté entre le connecteur de masse de ladite source d'énergie électrique (2) et le conducteur de terre dudit système de câblage électrique (3) lorsque ledit dispositif est connecté entre ladite source d'énergie électrique (2) et ledit système de câblage électrique (3), lesdits moyens de commande comprenant l'un desdits troisièmes des étages de conditionnement (12) connectés en cascade audit cinquième étage de mesure (65).

9. Dispositif selon la revendication 8, **caractérisé en ce que** ledit cinquième étage de mesure (65) comprend :
- un troisième transformateur de mesure (66) du courant électrique de dispersion traversant un conducteur de terre couplé à une troisième résistance de charge (67), ledit troisième transformateur (66) étant connecté entre le conducteur de terre de ladite source d'énergie électrique (2) et la terre conducteur dudit système de câblage électrique (3) lorsque ledit dispositif est connecté entre ladite source d'énergie électrique (2) et ledit système de câblage électrique (3) ;
- des sixièmes moyens de mesure (68) d'une tension entre deux bornes de ladite troisième résistance (67),
ledit troisième étage de conditionnement (12) étant connecté en cascade audit sixième moyen de mesure (68).

10. Dispositif selon l'une quelconque des revendications précédentes, **caractérisé en ce qu'**il comprend une électrode de masse dédiée, lesdits moyens de contrôle comprenant un sixième étage de mesure d'une tension entre ladite électrode de masse et le conducteur de masse dudit système de câblage électrique lorsque ledit dispositif est connecté entre ladite source d'énergie électrique et ledit système de câblage électrique, lesdits moyens de commande comprenant l'un desdits troisièmes étages de conditionnement connecté en cascade audit sixième étage de mesure.

11. Dispositif (1) selon l'une quelconque des revendications précédentes, **caractérisé en ce que** chacun desdits troisièmes étages de conditionnement (12) comprend :
- au moins un amplificateur à gain variable (35) connecté en cascade auxdits moyens de mesure (23, 24, 25, 32, 62, 68);
- une multiplicité d'instances de conditionneur (36) comprenant chacune :
> au moins un filtre passe-bande à fréquence variable (37) connecté en cascade audit premier amplificateur à gain variable (35);
> au moins un deuxième amplificateur à gain variable (39) connecté en cascade audit filtre passe-bande (37),
lesdits moyens de commande comprenant l'un desdits convertisseurs analogique-numérique (13) pour chaque dite instance de conditionnement (36), lesdits convertisseurs analogique-numérique (13) étant respectivement connectés en cascade auxdits seconds amplificateurs à gain variable (36).

12. Dispositif selon la revendication 11, **caractérisé en ce qu'**une ou plusieurs desdites instances de conditionneur (36) comprend en outre :
> au moins un redresseur (38) connecté en série entre ledit filtre passe-bande (37) et ledit deuxième amplificateur à gain variable (39);
et/ou
> au moins un différentiateur (40) connecté en cascade audit deuxième amplificateur à gain variable (39), ledit dispositif comprenant un desdits convertisseurs analogique-numérique (13) également pour chacun desdits différenciateurs (40), lesdits autres convertisseurs analogique-numérique ( 13) étant connectés en cascade auxdits différentiateurs (40), respectivement;
et/ou
> au moins un intégrateur (41) connecté en cascade audit deuxième amplificateur à gain variable (39), ledit dispositif comprenant un desdits convertisseurs analogique-numérique (13) également pour chacun desdits intégrateurs (41), lesdits autres convertisseurs analogique-numérique ( 13) étant connectés en cascade auxdits intégrateurs (41), respectivement.

13. Dispositif selon la revendication 1, **caractérisé en ce qu'**il comprend :
• des moyens de détection (70) d'activité sismique et/ou de présence de fumée et/ou de gaz combustible et/ou d'inondation à l'endroit où est installé ledit dispositif, ledit processeur (17) étant connecté auxdits moyens de détection (70) et étant adapté pour commander lesdits moyens de déplacement (6) de manière à déterminer un mouvement dudit commutateur (5) de ladite première position à ladite seconde position lorsque lesdits moyens de détection (70) détectent une activité sismique d'intensité supérieure à un seuil prédéterminé ou une concentration de fumée ou gaz supérieur à un seuil prédéterminé ou une inondation.

14. Dispositif selon la revendication 1, **caractérisé en ce qu'**il comprend :
• un moyen émetteur-récepteur d'ondes électromagnétiques radiofréquence (72), ledit moyen émetteur-récepteur (72) étant adapté pour :
- transmettre des ondes codant ledit signal d'alarme et des ondes codant des informations relatives à des valeurs stockées dans ladite première mémoire (14) et/ou seconde mémoire (15), et à des décisions de déconnexion éventuellement émises par ledit système expert (16) ou par ledit classificateur (45) ;
- recevoir des ondes codant un signal d'alarme et/ou une commande de déconnexion provenant d'appareils extérieurs audit dispositif,
ledit processeur (17) étant adapté pour commander lesdits moyens d'émission (71) de manière à émettre un signal d'alarme lorsque lesdits moyens d'émetteur-récepteur (72) reçoivent lesdites ondes codant un signal d'alarme,
ledit processeur (17) étant en outre adapté pour commander ledit moyen de déplacement (6) de manière à déterminer un mouvement dudit commutateur (5) de ladite première position à ladite seconde position lorsque ledit moyen émetteur-récepteur (72) reçoit ladite onde codant une commande de déconnexion .

15. Dispositif selon la revendication 1, **caractérisé en ce qu'**il comprend :
• une troisième mémoire adaptée pour stocker des valeurs stockées dans ladite première mémoire (14) et des décisions de déconnexion éventuellement prises par ledit système expert (16) ou par ledit classificateur (45).
